# EUROPÄISCHE PATENTSCHRIFT

(11) **EP 3 942 302 B1**
(45) Veröffentlichungstag und Bekanntmachung des Hinweises auf die Patenterteilung: **25.10.2023**
(21) Anmeldenummer: 20709252.9
(22) Anmeldetag: 13.03.2020
(51) Int. Cl.: G01N 35/00

(54) **LABORSYSTEM MIT PORTABLEM, EIN MIKROPHON BEINHALTENDEM GERÄT UND VERFAHREN HIERZU**
LABORATORY SYSTEM WITH PORTABLE DEVICE COMPRISING A MICROPHONE AND METHOD THEREFOR
SYSTÈME DE LABORATOIRE POURVU D'APPAREIL PORTABLE COMPRENANT UN MICROPHONE ET PROCÉDÉ

(30) Priorität: 18.03.2019 EP 19163512
(43) Veröffentlichungstag der Anmeldung: 26.01.2022
(73) Patentinhaber: Evonik Operations GmbH, 45128 Essen (DE)
(72) Erfinder: KROEHL, Oliver, 50933 Köln (DE); BLANDA, Gaetano, 45721 Haltern am See (DE); SILBER, Stefan, 47804 Krefeld (DE); SCHÖNEBERG, Ulf, 12101 Berlin (DE); HUSEN, Inga, 44137 Dortmund (DE); BARDAS, Michael, 64331 Weiterstadt (DE); TIMM, Andreas, 10179 Berlin (DE); LANGE, Thomas, 44269 Dortmund (DE); BITTORF, Sandra, 58455 Witten (DE); ISKEN, Philipp, 48341 Altenberge (DE)
(74) Vertreter: Evonik Patent Association
(86) Internationale Anmeldenummer: PCT/EP2020/056962
(87) Internationale Veröffentlichungsnummer: WO 2020/187789

(56) Entgegenhaltungen:
- DE-A1-102014 005 549
- US-A1- 2013 266 952
- US-A1- 2014 206 412
- US-A1- 2015 074 093
- US-A1- 2015 127 270

## Beschreibung

### Technisches Gebiet

Die Erfindung betrifft die Steuerung von Laborgeräten, und insbesondere die Steuerung komplexer Laborsysteme.

### Stand der Technik

In chemischen Laboratorien gelten aufgrund verschiedener sowohl von Substanzen als auch von Geräten ausgehender Gefahren eine Vielzahl von Regeln, um dort ein sicheres Arbeiten zu gewährleisten. Je nach Art des Labors, der dort ausgeführten Tätigkeiten und den verwendeten Substanzen können deshalb unter anderem Folgende Sicherheitsvorschriften herrschen: es ist eine persönliche Schutzausrüstung zu tragen, die neben einem Laborkittel auch Schutzbrille oder Schutzmaske sowie Schutzhandschuhe umfassen kann. Mitnahme und Verzehr von Speisen und Getränken ist in der Regel nicht gestattet und zur Vermeidung von Kontamination ist der Bürobereich mit Schreibtisch, Handbüchern, Produktdokumentation in Papierform, Computerarbeitsplatz und Internetzugang und der Laborarbeitsbereich räumlich voneinander getrennt. Die räumliche Trennung kann vorsehen, dass zwischen Bürobereich und Laborbereich nur über eine Sicherheitsschleuse gewechselt werden kann. Es kann auch vorgeschrieben sein, die Sicherheitskleidung bei Verlassen des Laborbereiches abzulegen.

Die Sicherheitsvorschriften erschweren den Arbeitsablauf teils erheblich: Laborgeräte, und insbesondere komplexe Laborsysteme mit mehreren Laborgeräten, stellen dem Nutzer eine eigene Bedienoberfläche bereit, die oftmals aus Bildschirm, Maus und Tastatur und/oder einem Touchscreen besteht. Oftmals handelt es sich dabei um Standard-Gerätekomponenten, die mit Laborhandschuhen nicht oder nur schwer bedient werden können. Es kommt vermehrt zu Fehleingaben, die den Arbeitsfluss verlangsamen und auch zu einer fehlerhaften Kontrolle und Bedienung des Laborgerätes führen kann. Das Ausziehen der Handschuhe vor der Bedienung des Laborsystems birgt ein Kontaminationsrisiko, verlangsamt das Arbeiten und ist aus Sicherheitsgründen manchmal gar nicht möglich.

Im Einzelfall gibt es Laborgeräte mit einer besonders großen Tastatur, etwa in Form eines großen Touchscreens, um die Eingabe mit Handschuhen zu erleichtern. Diese spezielle Hardware ist jedoch teuer und nicht für alle Laborgeräte verfügbar. Insbesondere besitzen Standard-Computer und Standard-Notebooks nicht über eine solche "handschuhgeeignete" Tastatur. Die Möglichkeit, auch Standard-Computer mit einem konventionellen Internetbrowser bedienen zu können wird im Laborkontext jedoch zunehmend wichtiger, etwa, um in online-verfügbaren chemischen Datenbanken recherchieren zu können.

Die derzeit verfügbaren Möglichkeiten zur Steuerung von bzw. Interaktion mit Laborgeräten und Laborsystemen sind im Kontext eines chemischen oder biologischen Labors sehr eingeschränkt und ineffizient.

Die Druckschrift US 2015/0127270 A1 beschreibt ein Laborsystem, das eine automatische Verarbeitung von Proben erlaubt und Daten zu diesen zusammenstellen kann. Hierbei ist eine Sprachsteuerung möglich. Die Druckschrift US 2013/0266952 A1 betrifft ein Laborgerät zur Handhabung von Flüssigkeiten, das mittels Spracheingabe über ein Mobiltelefon gesteuert werden kann. Die Druckschrift DE 102014005549 A1 betrifft ein System zur berührungsfreien Überwachung von Reaktionsgefäßen. Dabei werden Reagenzgefäße mittels RFID-Chips identifiziert.

### Zusammenfassung

Ziel der vorliegenden Erfindung ist es, ein verbessertes Laborsystem und Verfahren zur Steuerung zumindest eines Laborgeräts oder eines Labor-Softwaremoduls gemäß den unabhängigen Ansprüchen bereitzustellen, welches insb. im Laborkontext eine verbesserte Sprach-zu-Text-Umwandlung ermöglicht. Ausführungsformen der Erfindung sind in den abhängigen Ansprüchen angegeben. Ausführungsformen der vorliegenden Erfindung können frei miteinander kombiniert werden, wenn sie sich nicht gegenseitig ausschließen.

In einem Aspekt betrifft die Erfindung ein Laborsystem. Das Laborsystem beinhaltet zumindest ein Laborgerät, das zur Analyse und/oder Synthese einer chemischen Substanz ausgebildet ist. Das Laborsystem beinhaltet ferner zumindest ein Labor-Softwaremodul, das zur Verarbeitung von Daten, die von dem zumindest einen Laborgerät gewonnen wurden, ausgebildet ist. Das Laborsystem beinhaltet ferner ein Datenverarbeitungsgerät mit einer Kontrollsoftware, eine Schnittstelle zur Bedienung des zumindest einen Laborgeräts und/oder des zumindest einen Labor-Softwaremoduls bereitstellt. Das Laborsystem beinhaltet ferner ein portables Gerät mit Mikrophon. Das Gerät ist über ein Netzwerk mit der Kontrollsoftware interoperabel verbunden und ist dazu ausgebildet, in Interoperation mit der Kontrollsoftware einem Nutzer eine eingriffsfreie Bedienung des zumindest einen Laborgeräts und/oder des zumindest einen Labor-Softwaremoduls durch Spracheingabe in das Mikrophon zu ermöglichen.

Dies erlaubt eine erleichterte und verbesserte Kontrolle und Steuerung von Laborgeräten, z.B. in biologischen und chemischen Laboratorien, durch eine oder mehrere Personen ermöglichen. Da die Kontrolle der Laborgeräte und der damit assoziierten Labor-Softwaremodule über eine Spracheingabe erfolgt, ist es nicht erforderlich, dass Handschuhe ausgezogen oder sonstige zeitaufwändige Maßnahmen getroffen werden müssen, um Steuerbefehle einzugeben. Die sprachbasierte Eingabe erlaubt es, Informationen an einem beliebigen Ort in akustischer Reichweite des portablen Geräts, insbesondere innerhalb eines Laborbereiches, einzugeben. Die die Spracheingabe tätigende Person muss also nicht ihren Laborarbeitsplatz verlassen, bzw. hat die Möglichkeit, sich frei zwischen verschiedenen Arbeitsplätzen im Laborbereich zu bewegen, solange sie dabei den Empfangsbereich des Mikrophons des portablen Geräts nicht verlässt.

Die Steuerung von Zielsystemen mittels Spracheingabe ist an sich bekannt. So gibt es auf dem Markt günstige Endgeräte mit Mikrophon und leistungsfähigen Applikationen zur sprachbasierten Eingabe von Befehlen, zum Beispiel Echo Dot mit Alexa (Amazon), Smart Speaker diverser Hersteller mit Cortana (Microsoft), Google Home Max/Mini mit dem Google Assistant (Google) und HomePod mit Siri (Apple). Diese sind jedoch dazu konzipiert, Endnutzer bei alltäglichen Tätigkeiten wie etwa dem Einkauf, der Wahl eines Radioprogramms oder der Buchung eines Hotels zu unterstützen. Die besagten Endgeräte und Applikationen sind damit für alltägliche Situationen konzipiert und unterstützen auch nur allgemeinsprachliche Wörter. Die bestehenden Endgeräte sind für den Einsatz in einem Labor und für die Erkennung von Fachwörtern weder konzipiert noch geeignet. Die heute kommerziell erhältlichen Endgeräte sind außerdem nicht dazu ausgebildet, vom Nutzer nachträglich modifiziert zu werden, sodass ein Nutzer keine Möglichkeit hat, die derzeit auf dem Markt verfügbaren SmartSpeaker-Systeme mit Spracherkennung für den Einsatz im Laborbereich zu nutzen.

Die Kontrollsoftware des Laborsystems ist erfindungsgemäß dazu konfiguriert, ein Sprachsignal, das das Mikrofon auf Basis der Spracheingabe aufgenommen hat, von dem portablen Gerät zu empfangen. Das Sprachsignal beinhaltet von dem Nutzer gesprochene allgemeinsprachliche und fachsprachliche Wörter. Die Kontrollsoftware ist ferner dazu konfiguriert, das empfangene Sprachsignal in ein Sprach-zu-Text-Umwandlungssystem einzugeben, wobei das Sprach-zu-Text-Umwandlungssystem lediglich die Umwandlung von Sprachsignalen in ein Zielvokabular, welches die fachsprachlichen Wörter nicht beinhaltet, unterstützt. Die Kontrollsoftware empfängt daraufhin einen Text, der von dem Sprach-zu-Text-Umwandlungssystem aus dem Sprachsignal erzeugt wurde, von dem Sprach-zu-Text-Umwandlungssystem. Die Kontrollsoftware ist ferner dazu konfiguriert, einen korrigierten Text aus dem empfangenen Text zu erzeugen, wobei der korrigierte Text durch die Kontrollsoftware alleine oder durch die Kontrollsoftware in Interpretation mit einer Textkorrektursoftware, mit der die Kontrollsoftware lokal oder über ein Netzwerk operativ verbunden ist, erzeugt wird. Der korrigierte Text wird durch automatisches Ersetzen von Wörtern und Ausdrücken des Zielvokabulars in dem empfangenen Text durch fachsprachliche Wörter gemäß einer Zuordnungstabelle von Wörtern in Textform erzeugt. Die Zuordnungstabelle weist jedem von einer Vielzahl von fachsprachlichen Wörtern zumindest ein Wort aus dem Zielvokabular zu. Das einem fachsprachlichen Wort zugeordnete zumindest eine Wort des Zielvokabulars ist ein Wort oder ein Ausdruck, welches bzw. welchen das Sprach-zu-Text-Umwandlungssystem fälschlicherweise erkennt, wenn dieses fachsprachliche Wort in Form eines Sprachsignals eingegeben wird. Die Kontrollsoftware ist dazu konfiguriert, den korrigierten Text zu verwenden um das zumindest eine Laborgerät und/oder das zumindest eine Labor-Softwaremodul dazu zu veranlassen, die Analyse, Synthese und/oder die Softwarefunktion gemäß Angaben in dem korrigierten Text auszuführen.

Es wurde eine Kontrollsoftware entwickelt, welche dazu in der Lage ist, alleine oder in Interoperation mit weiteren Komponenten auch Spracheingaben mit fachsprachlichen Wörtern korrekt in Text umzusetzen und ein portables Gerät mit Mikrophon entwickelt, welches mit dieser Kontrollsoftware interoperabel ist. Somit wurde ein Laborsystem bereitgestellt, welches eine sprachbasierte Kontrolle von Laborgeräten und zugehörigen Labor-Softwaremodulen auf ähnlich einfache und eingriffsfreie Weise ermöglicht wie dies heute im Smart-Home-Bereich auf Basis etwa von Amazons Echo Dot möglich ist.

Die Verwendung eines Sprach-zu-Text-Umwandlungssystem, das die Fachwörter nicht unterstützt, in Kombination mit einer anschließenden Korrektur des Textes basierend auf der Zuordnungstabelle kann aus mehreren Gründen vorteilhaft sein.

Zum einen existieren bereits eine Reihe allgemeinsprachliche Sprach-zu-Text-Umwandlungssysteme, z.B. Google's "Speech to Text", die zumindest für allgemeinsprachliche Wörter und Ausdrücke eine hohe Genauigkeit aufweisen und teilweise kostenlos nutzbar und über eine offene API in proprietäre Softwareprogramme integrierbar sind. Eine Spracheingabe im Laborkontext umfasst in der Regel eine Mischung aus Fachwörtern und allgemeinsprachlichen Wörtern, sodass zumindest eine korrekte Umsetzung der allgemeinsprachlichen Wörter in Text gewährleistet ist. Die Sprach-zu-Text-Umwandlungssysteme von Google und anderen Clouddienstanbietern werden kontinuierlich weiterentwickelt, eine Leistung, die von den Herstellern von Laborgeräten und Labormanagementsystemen in der Regel nicht in der Qualität erbracht werden kann, wie dies den großen Clouddienstanbietern wie Google, Amazon, und Apple möglich ist.

Allerdings sind die besagten allgemeinsprachlichen Sprach-zu-Text-Umwandlungssysteme an sich für den Einsatz im Laborkontext nicht geeignet, da fachsprachliche Wörter ("Fachwörter") von dem Sprach-zu-Text-Umwandlungssystem nicht unterstützt werden. In der Biologie und insbesondere der chemischen Industrie wird im Laborkontext eine Vielzahl von Fachwörtern benutzt, die in der Allgemeinsprache nicht vorkommen. Diese werden von dem Sprach-zu-Text-Umwandlungssystem nicht erkannt, an ihrer Stelle werden daher ähnlich klingende allgemeinsprachliche Wörter fälschlicherweise erkannt und in Text umgesetzt. Gerade im Kontext eines chemischen Labors ist jedoch eine hohe Präzision der Spracherkennung von besonderer Bedeutung. Während in der Alltagssprache kleine Fehler oft als solche erkennbar sind und vom Nutzer oder Empfängersystem leicht korrigiert oder kompensiert werden können (zum Beispiel fehlerhafte Erkennung der Singular/Pluralform führt nicht dazu, dass eine entsprechende Eingabe in eine Internetsuchmaschine wesentlich andere Ergebnisse zurückgibt), können im Kontext chemischer Synthesen bereits kleinste Abweichungen (z.B. "bis" statt "tris") dazu führen, dass eine völlig andere Substanz "erkannt" wird als die, welche der Sprecher eigentlich meinte, und das resultierende Produkt unbrauchbar ist. Die besagten und für den Alltag konzipierten Sprach-zu-Text-Umwandlungssysteme sind daher für die Verwendung in biologischen und chemischen Laboratorien nicht geeignet.

Teilweise existieren Sprach-zu-Text-Umwandlungssysteme, welche speziell auf die Belange und das Vokabular einer bestimmten Fachrichtung ausgelegt sind. So bietet beispielsweise die Firma Nuance die Software "Dragon Legal" für Juristen an, welche zusätzlich zum alltagssprachlichen Vokabular auch juristische Fachbegriffe beinhaltet. Nachteilig ist jedoch, dass das Vokabular, das in einem bestimmten Labor benötigt wird, z.B. im Bereich der Herstellung und Analyse von Farben und Lacken, so speziell und dynamisch veränderlich ist, dass auch eine Spracherkennungssoftware mit chemischen Begriffen, die etwa einem Standardlehrbuch der Chemie entnommen werden könnte, für die Praxis einer speziellen Firma oder eines speziellen Zweigs der chemischen Industrie oft ungeeignet wäre, da im Labor vielfach auch mit Handelsnamen von Substanzen gearbeitet wird. Diese Handelsnamen können sich verändern bzw. es kommen jedes Jahr eine Vielzahl neuer Handelsnamen für relevante Produkte hinzu. Insbesondere kommt jedes Jahr eine Vielzahl weiterer Produkte und Produktvariationen unter neuen Handelsnamen auf dem Markt, die für die Herstellung von Farben und Lacken verwendet werden können. Sogar wenn es ein Sprach-zu-Text-Umwandlungssystem gäbe, welches an die Exaktheit der alltagssprachlichen Systeme von Google oder Apple heranreicht und welches die wichtigsten chemischen Fachbegriffe beinhalten würde (was nicht der Fall ist), wäre dieses System aufgrund der Dynamik und Vielzahl der Namen, die in der Praxis im chemischen Labor, insbesondere bei der Herstellung von Farben und Lacken, eine Rolle spielen, für den Einsatz in der Praxis wenig geeignet, da die meisten in der praxisrelevanten Wörter nicht unterstützt würden bzw. zumindest nach einigen wenigen Jahren das Vokabular völlig veraltet wäre.

Gemäß Ausführungsformen der Erfindung wird dieses Problem wie oben beschrieben dadurch gelöst, dass auf ein Sprach-zu-Text-Umwandlungssystem zurückgegriffen wird, von welchen bekannt ist, dass es die relevanten Fachbegriffe nicht unterstützt. Es wird also von vornherein nicht versucht, hier eine teure und aufwändige Spezialentwicklung zu implementieren, die nur ein sehr kleines Marktsegment bedient und daher mit einiger Wahrscheinlichkeit nicht die Erkennungsgenauigkeit der bekannten großen Umwandlungssysteme von Amazon, Google, Microsoft Azure oder Apple erreichen würde, was allgemeinsprachliche Begriffe angeht, die bei Spracheingaben neben den chemischen Fachbegriffen ja auch berücksichtigt und richtig erkannt werden müssen. Vielmehr machen sich Ausführungsformen der Erfindung die bereits sehr gute Erkennungsgenauigkeit der bestehenden Dienstleister für allgemeinsprachliche Begriffe zu Nutze und führen vor der Ausgabe des erkannten Textes eine Korrektur durch. Im Zuge der Korrektur werden auf Basis der Zuordnungstabelle die falsch erkannten Wörter durch Fachwörter ersetzt, sodass ein korrigierter Text erstellt wird, der schließlich ausgegeben wird. Das hochspezifische Fachvokabular, das aufgrund der Dynamik des Gebietes und der Vielzahl an Marktteilnehmern, Produkten und entsprechenden Produktnamen kontinuierlich aktualisiert werden muss, um die Software praxistauglich zu halten, steckt also letztlich in einer Zuordnungstabelle. Diese lässt sich mit sehr geringem Aufwand aktuell halten. Eine Modifikation von Programmquellcode, von statistischen Sprachmodellen, ein Neukompilieren und/oder Neutrainieren von Machine-Learning-Programmen ist also gemäß Ausführungsformen der Erfindung nicht erforderlich, eine Modifikation bzw. Ergänzung einer Tabelle ist ausreichen.

Neue Fachwörter können einfach dadurch ergänzt werden, dass die Zuordnungstabelle mit den neuen Fachwörtern, jeweils zusammen mit ein oder mehreren für dieses Fachwort fälschlich erkannten Zielvokabular-Wörtern, ergänzt wird. In technischer Hinsicht ist damit die Speicherung und Aktualisierung der Fachwörter von der eigentlichen Spracherkennungslogik völlig entkoppelt. Dies hat zudem den Vorteil, dass eine Abhängigkeit von einem bestimmten Anbieter von Spracherkennungsdiensten vermieden wird. Das Gebiet der Spracherkennung ist noch jung und es ist noch nicht absehbar, welche der Vielzahl an parallelen Lösungen im Hinblick auf Erkennungsgenauigkeit und/oder Preis langfristig die beste Wahl sind. Die Bindung an ein bestimmtes Sprach-zu-Text-Umwandlungssystem erfolgt gemäß Ausführungsformen der Erfindung nur dadurch, dass das empfangene Sprachsignal zunächst an dieses Umwandlungssystem gesendet und ein (fehlerhafter) Text empfangen wird. Außerdem enthält die Zuordnungstabelle fehlerhaft erkannte Wörter des Zielvokabulars, welche von diesem speziellen Umwandlungssystem für einen bestimmten Fachbegriff (fälschlicherweise) zurückgegeben wurden. Beides lässt sich aber leicht ändern, indem für die Erzeugung des (fehlerhaften) Textes ein anderes Sprach-zu-Text-Umwandlungssystem genutzt wird und zu diesem Zwecke zudem mittels dieses anderen Umwandlungssystems die Zuordnungstabelle neu erstellt wird. Komplexe Änderungen, etwa an der Logik eines Syntaxparsers und/oder eines neuronalen Netzes sind nicht erforderlich.

Auch für Mitarbeiter im Außendienst der chemischen Industrie oder der chemischen Produktion kann die Kombination aus dem alltagssprachlichen Sprache-zu-Text Umwandlungssystem gemäß Ausführungsformen der Erfindung vorteilhaft sein, da diese Mitarbeiter oftmals ohnehin einen Computer oder zumindest ein Smartphone im Zuge ihrer dienstlichen Tätigkeit benutzen und durch eine Spracheingabe in eine z.B. als App oder als Browserplugin ausgestaltete Korrektursoftware weniger vom Kunden bzw. ihrer Tätigkeit abgelenkt werden als durch eine Texteingabe über die Tastatur. Diesen Nutzern kann über eine Clientsoftware auf deren Endgeräten, die mit der Kontrollsoftware interoperabel ist um Sprachsignale dieser Nutzer über die Kontrollsoftware an das Sprache-zu-Text-Umwandlungssystem weiterzugeben, ebenfalls ein Zugriff und eine Kontrolle auf die Funktionen des Laborgeräts und/oder des Labor-Softwaremoduls des Laborsystems gegeben werden.

Ein weiterer Vorteil kann darin bestehen, dass das portable Gerät gemäß Ausführungsformen lediglich das Sprachsignal aufnimmt, an die Kontrollsoftware weitergibt und optional ein Ergebnis der Ausführung einer Funktion gemäß Angaben in der Spracheingabe empfängt und ausgibt. Die eigentliche Sprache-zu-Text-Umwandlung des Sprachsignals in einen Text, also der bei weitem rechenintensivste Schritt, wird von dem Sprach-zu-Text-Umwandlungssystem durchgeführt. Das Sprache-zu-Text-Umwandlungssystem kann zum Beispiel ein Server sein, der über ein Netzwerk, zum Beispiel das Internet, mit der Kontrollsoftware verbunden ist. Somit kann auch ein portables Gerät mit geringer Prozessorleistung, zum Beispiel ein Smartphone oder ein Einplatinenrechner, für die Eingabe langer und komplexer sprachlicher Eingaben verwendet werden und auch die Ressourcen des Rechners, auf dem die Kontrollsoftware installiert ist, werden geschont.

Nach Ausführungsformen ist die Kontrollsoftware als virtueller Laborassistent für den Betrieb des zumindest einen Laborgeräts und des zumindest einen Labor-Softwaremoduls ausgebildet.

Dies kann vorteilhaft sein, da die Eingabe von Steuerbefehlen durch einen Nutzer und die Interaktion zwischen Nutzer und den Laborgeräten bzw. Labor-Softwaremodulen weiter erleichtert wird. Beispielsweise kann der virtuelle Laborassistent ein oder mehrere Stimmgeneratoren implementieren, welche jeweils eine computergenerierte aber natürlich klingende Stimme erzeugen und die Ergebnisse der Durchführung einer bestimmten Funktion durch ein Laborgerät oder ein Labor-Softwaremodul dem Nutzer in dieser natürlichen Stimme vorlesen. Es ist auch möglich, dass der virtuelle Laborassistent auf einen bestimmten Namen "hört", das heißt, eine Spracheingabe bzw. einen aus dieser generierten Text daraufhin zu untersuchen, ob sein Name darin genannt ist und falls ja, bestimmten Funktionen selbst durchzuführen oder von einem Zielsystem durchführen zu lassen. Der Laborarbeiter kann also mit der Kontrollsoftware und dem von dieser implementierten virtuellen Laborassistenten in ähnlicher Weise interagieren wie er es mit einem menschlichen Kollegen tun würde.

Nach Ausführungsformen ist das portable Gerät dazu konfiguriert, ein Sprachsignal des Nutzers über das Mikrophon zu empfangen und das empfangene Sprachsignal an die Kontrollsoftware weiterzuleiten. Die Weiterleitung des Sprachsignals erfolgt, um eine Umwandlung des Sprachsignals in einen Text durch die Kontrollsoftware oder durch ein mit der Kontrollsoftware operativ verbundenes Sprach-zu-Text-Umwandlungssystem zu ermöglichen.

Nach Ausführungsformen der Erfindung umfasst das portable Gerät ferner einen Lautsprecher. Das portable Gerät ist dazu konfiguriert, in Antwort auf das Senden des Sprachsignals, ein Ergebnis einer Ausführung einer Funktion von der Kontrollsoftware zu empfangen. Die besagte Funktion wird gemäß dem Text durch das zumindest eine Laborgerät und/oder durch das zumindest eine Labor-Softwaremodul durchgeführt. Das portable Gerät ist ferner dazu konfiguriert, das empfangene Ergebnis über den Lautsprecher an den Nutzer auszugeben.

Beispielsweise kann es sich bei dem empfangenen Ergebnis um einen Text handeln, der über eine Text-zu-Sprache Umwandlungssoftware des Gerätes in ein Audiosignal umgewandelt wird. Nach alternativen Ausführungsformen beinhaltet die Kontrollsoftware eine Text-zu-Sprache Umwandlungsfunktion und das Ergebnis wird bereits in Form eines elektronischen Audiosignals an das portable Gerät gesendet, sodass das Endgerät, das in manchen Ausführungsformen nur über geringe Rechenkapazitäten verfügt, keine Text-zu-Sprache Umwandlung mehr vornehmen muss.

Die Ausgabe des Ergebnisses als akustisches Signal über den Lautsprecher kann vorteilhaft sein, da der Nutzer dadurch die Bewegungsfreiheit, die durch die sprachbasierte Eingabe von Befehlen erreicht wird, nicht eingeschränkt wird. Der Nutzer kann also von jedem beliebigen Punkt des Labors aus, der sich innerhalb des Erkennungsbereichs des Mikrophons und der Hörbarkeit der akustischen Ausgabe des Lautsprechers befindet, frei bewegen und dabei sowohl Steuerbefehle und Rechercheanfragen per Spracheingabe abgeben als auch die Ergebnisse der Durchführung dieser Befehle und/oder Informationsrecherchen empfangen. Dies ist insbesondere im Kontext von Laborarbeiten hilfreich, da das Laborpersonal häufig zwischen verschiedenen Geräten und Laborbereichen wechseln muss, etwa, um Maschinen neu zu beladen oder zu konfigurieren, um den Fortgang eines Arbeitsschritts zu kontrollieren, um blockierte Bauteile oder Transportboxen zu lösen und dergleichen.

Nach manchen Ausführungsformen werden die Ergebnisse der Software- oder Hardwarefunktion, die von dem Labor-Softwaremodul oder dem Laborgerät entsprechend der Spracheingabe durchgeführt werden, dem Nutzer über einen Bildschirm angezeigt. Dies kann zusätzlich oder anstelle der Ausgabe über den Lautsprecher erfolgen. Gerade bei komplexen und umfangreichen Ergebnissen, z.B. den im Zuge einer Datenbank- oder Internetabfrage ermittelten Dokumenten, kann die Ausgabe an einem Bildschirm vorteilhaft sein, da ein Nutzer möglicherweise nicht alle Informationen eines langen Textes aufnehmen und verstehen kann, wenn dieser nur über den Lautsprecher ausgegeben wird.

Nach Ausführungsformen befindet sich das portable Gerät innerhalb des gleichen Raums wie das zumindest eine Laborgerät und/oder im gleichen Raum wie ein Hauptsteuerungsrechner einer Laboranlage, die das zumindest eine Laborgerät beinhaltet.

Dies kann vorteilhaft sein, da die meisten Mikrophontypen und insbesondere das Mikrophon des portablen Geräts dazu in der Lage ist, Spracheingaben innerhalb eines Raumes aufzuzeichnen und/oder weil die Lautstärke der meisten gängigen Lautsprecher, und insbesondere die des Lautsprechers des portablen Geräts, hinreichend ist, um von Personen im gleichen Raum gehört und verstanden zu werden.

Nach manchen Ausführungsformen umfasst das Laborsystem zwei oder mehrere der hier beschriebenen portablen Geräte mit Mikrophon und mit optionalem Lautsprecher. Diese Geräte werden vorzugsweise gleichmäßig im Laborraum verteilt positioniert. Dies kann vorteilhaft sein, da dadurch eine besonders gute Abdeckung sowohl hinsichtlich des Empfangs von Spracheingaben als auch der Ausgabe der Ergebnisse per Lautsprecher erzielt werden kann.

Nach Ausführungsformen der Erfindung handelt es sich bei dem portablen Gerät um einen Einplatinenrechner, insbesondere um einen Raspberry Pi Rechner.

Dies kann vorteilhaft sein, da es sich bei derartigen Einplatinenrechnern um kostengünstige Bauteile handelt, die dazu konzipiert sind, vom Endnutzer angepasst und modifiziert zu werden, z.B. durch Installation einer Client-Software, die mit einer frei festlegbaren serverseitigen Software, z.B. der Kontrollsoftware, über ein Netzwerk interoperabel ist um dem Nutzer die Funktionalität der Kontrollsoftware per Spracheingabe nutzbar zu machen.

Beispielsweise erlaubt der "Google Assistant SDK" eine Integration von Googles Spracherkennungsdiensten in ein Endgerät wie z.B. Raspberry Pi. Zahlreiche Videotutorials hierzu sind auf Youtube zu finden.

Gemäß Ausführungsformen der Erfindung wird das portable Gerät jedoch nicht direkt an einen Googledienst oder sonstigen Sprache-zu-Text-Umwandlungsdienst angeschlossen, sondern nur eine Clientsoftware installiert, die das portable Gerät interoperabel macht zu der Kontrollsoftware, die den Datenaustausch mit einem über Netzwerk verbundenen Sprache-zu-Text-Umwandlungssystem und die Korrektur des von diesem Umwandlungssystem empfangenen Textes koordiniert.

Zum Beispiel kann die Software "Google Assistant on Raspberry Pi" auf dem Raspberry Pi installiert und dahingehend konfiguriert werden, dass die vom portablen Gerät empfangenen Sprachsignale an die Kontrollsoftware gesendet werden. Die Adresse der Kontrollsoftware ist also im portablen Gerät vorgegeben und gespeichert. Dies kann vorteilhaft sein, da ein portables und sehr kostengünstiges Endgerät zum Zweck der vereinfachten Interaktion mit datenverarbeitenden Geräten und Diensten innerhalb eines Labors bereitgestellt wird, das so konfiguriert werden kann, dass es mit beliebigen Softwareapplikationen, z.B. einer Kontrollsoftware, die einen virtuellen Laborassistenten implementiert, interoperiert.

Eine Auslagerung dieser Koordinationsfunktion auf die Kontrollsoftware kann vorteilhaft sein, da Raspberry Pi Rechner nur über eine geringe Rechenleistung verfügen und daher die Koordination der Umwandlung von Sprachsignalen in Text sowie eine ggf. daran anschließende Textkorrektur schneller von anderen, leistungsfähigeren Geräten ausgeführt werden können.

Nach Ausführungsformen der Erfindung handelt es sich bei den fachsprachlichen Wörtern um Wörter aus einer der folgenden Kategorien:
- Namen von chemischen Substanzen, insbesondere von Farben und Lacken insbesondere beziehen sich die Namen auch chemische Namen nach einer chemischen Namenskonvention, z.B. gemäß der IUPAC Nomenklatur;
- Physikalische, chemische, mechanische, optische oder haptische Eigenschaften chemischer Substanzen;
- Namen von Laborgeräten und Geräten der chemischen Industrie (z.B. Handelsnamen oder vom Benutzer für die Laborgeräte eines Labors vergebene Eigennamen));
- Namen von Labor-Verbrauchsmaterial und Labor-Bedarf;
- Handelsnamen im Farb- und Lackbereich.

Nach Ausführungsformen der Erfindung handelt es sich bei den fachsprachlichen Wörtern um Wörter aus dem Gebiet der Chemie, insbesondere der chemischen Industrie, insbesondere der Chemie der Farben und Lacke.

Nach Ausführungsformen der Erfindung besteht das Zielvokabular aus einer Menge allgemeinsprachlicher Wörter.

Nach anderen Ausführungsformen der Erfindung besteht das Zielvokabular aus einer Menge allgemeinsprachlicher Wörter sowie daraus abgeleiteter Wörter. Diese abgeleiteten Wörter können zum Beispiel dynamisch erstellte Konkatenationen von zwei oder mehr allgemeinsprachlichen Wörtern sein. In der deutschen Sprache werden beispielsweise viele Wörter, insbesondere Substantive, durch Kombination mehrerer anderer Substantive gebildet. So ist z.B. das Wort "Schiffsschraube" so gebräuchlich, dass es in der Regel in den meisten allgemeinsprachlichen Wörterbüchern vorhanden ist. Ein eher selten benutzter Begriff wie "Befestigungsschraube" fehlt dagegen in den meisten allgemeinsprachlichen Wörterbüchern. Manche Sprach-zu-Text-Umwandlungssysteme können aber mittels Heuristiken und/oder neuronalen Netzen auch Wörter wie "Befestigungsschraube" erkennen, sofern die einzelnen Wortbestandteile "Befestigung" und "Schraube" Bestandteil des Zielvokabulars sind. In diesem Sinne gehört dann auch das Wort "Befestigungsschraube" zum Zielvokabular dieser Art von Sprach-zu-Text-Umwandlungssystem.

Nach anderen Ausführungsformen der Erfindung besteht das Zielvokabular aus einer Menge allgemeinsprachlicher Wörter ergänzt um Wörter, die durch Kombination erkannter Silben gebildet werden. Diese Sprach-zu-Text-Umwandlungssysteme sind also flexibler im Hinblick darauf, welche Wörter erkannt werden können, da die Erkennung -zumindest auch- auf der Ebene einzelner Silben, nicht nur einzelner Wörter, erfolgen kann. Allerdings ist die silbenbasierte Erkennung auch besonders fehleranfällig, da die Gefahr einer fehlerhaften Erkennung eines Wortes, das in keinem bekannten Vokabular existiert, besonders groß ist. Aufgrund der Endlichkeit der Menge an unterstützten bzw. bekannten Silben und der Beschränkung der Menge der kombinierbaren Silben durch die typische Wortlänge ist auch die Menge der silbenbasiert erzeugbaren Zielwörter endlich. Somit haben auch Sprach-zu-Text-Umwandlungssysteme, die eine silbenbasierte Worterzeugung unterstützen, trotz ihrer größeren Flexibilität ein endliches Zielvokabular. Auch wenn solche Systeme aufgrund ihrer Flexibilität theoretisch in der Lage sind, auch viele chemische Begriffe dynamisch zu erkennen, die nicht in einem vorbekannten Lexikon enthalten sind, ist die Erkennungsgenauigkeit in der Praxis derart gering, dass im Hinblick auf die Praxis auch solche Systeme letztlich ein Zielvokabular haben, welches diese chemischen Begriffe nicht beinhaltet bzw. nicht unterstützt.

In manchen Ausführungsformen der Erfindung besteht das Zielvokabular aus einer Menge allgemeinsprachlicher Wörter ergänzt um daraus abgeleitete Wörter und ergänzt um Wörter, die durch Kombination erkannter Silben gebildet werden. Auch diese Umwandlungssysteme basieren auf einem Zielvokabular, welches die Fachwörter nicht enthält bzw. im praktischen Einsatz nicht mit hinreichender Genauigkeit erkennen kann, sondern stattdessen andere Wörter, typischerweise allgemeinsprachliche Wörter, fälschlicherweise erkennt und in Text umwandelt.

Somit kann eine Vielzahl unterschiedlicher, heute bereits verfügbarer Sprach-zu-Text-Umwandlungssysteme für Ausführungsformen der Erfindung genutzt werden, auch wenn diese Systeme im Wesentlichen nur alltagssprachliche Wörter "unterstützen" (d. h., mit hinreichender Genauigkeit richtig erkennen und in Text umsetzen können).

Nach Ausführungsformen der Erfindung empfängt oder berechnet das Computersystem, welches die Textkorrektur durchführt, also z.B. der Rechner mit der Kontrollsoftware oder der Korrekturrechner, Häufigkeitsangaben für zumindest einige der Wörter in dem Text, welcher von dem Sprach-zu-Text-Umwandlungssystem aus dem Sprachsignal erzeugt wurde. Die Häufigkeitsangaben geben für Wörter in diesem Text jeweils an, wie häufig das Auftreten dieses Wortes statistisch zu erwarten ist.

Bei der Erzeugung des korrigierten Textes werden selektiv nur diejenigen Wörter des Zielvokabulars in dem empfangenen Text durch fachsprachliche Wörter gemäß der Zuordnungstabelle ersetzt, deren statistisch erwartete Auftretenshäufigkeit gemäß den empfangenen Häufigkeitsangaben unter einem vordefinierten Schwellenwert liegt.

Dies kann vorteilhaft sein, da Spracheingaben des Nutzers in der Regel eine Mischung aus allgemeinsprachlichen Wörtern und Fachwörtern beinhalten. Es kann also auch der Fall auftreten, dass in dem von dem Umsetzungssystem empfangenen Text Wörter des Zielvokabulars enthalten sind, die in der Zuordnungstabelle einem Fachwort zugeordnet sind, und die normalerweise ersetzt würden. Beispielsweise könnte der zurückgegebene Text den Ausdruck "Polymer Innovation" enthalten. Da dieser Ausdruck "Polymer Innovation" in der Zuordnungstabelle einem Fachwort "Polymerisation" zugeordnet ist, würde der Ausdruck normalerweise im Zuge der Textkorrektur durch "Polymerisation" ersetzt. Ist dem Ausdruck "Polymer Innovation" jedoch eine Häufigkeitsangabe zugeordnet, die eine hohe Auftretenswahrscheinlichkeit repräsentiert, geht die Korrektursoftware aufgrund dieser Auftretenshäufigkeit davon aus, dass der Ausdruck "Polymer Innovation" korrekt ist, obwohl dieser in der Zuordnungstabelle einem Fachwort zugewiesen ist und belässt den Ausdruck "Polymer Innovation" als Folge dessen unverändert in dem Text. Beispielsweise kann eine Kontextanalyse der Wörter innerhalb des Satzes oder innerhalb der gesamten Spracheingabe ergeben, dass in dem Text das Wort "Innovation" gehäuft alleine auftritt, z.B. weil der Text von einem Außendienstmitarbeiter stammt, der die Vorzüge eines bestimmten Polymerprodukts schildert. In diesem Kontext kann auch der Ausdruck "Polymer Innovation" einen korrekt erkannten Ausdruck darstellen. In einem Kontext, in welchem weder "Polymer" noch "Innovation" alleine erwähnt werden, sinkt die Wahrscheinlichkeit. Auch haben Wörter auch kontextunabhängig an sich bereits unterschiedliche Auftretenswahrscheinlichkeiten, welche z.B. aus großen Textkorpussen ableitbar sind.

Das Ersetzen von Wörtern gemäß der Zuordnungstabelle in Abhängigkeit von Auftretenswahrscheinlichkeiten der Wörter im empfangenen Text kann vorteilhaft sein, da vermieden wird, dass in wenigen Einzelfällen Wörter der Zielsprache, die an sich oder im Kontext des jeweiligen Textes eine hohe Auftretenswahrscheinlichkeit haben, fälschlicherweise durch ein Fachwort ersetzt werden und durch die Ersetzung ein Fehler erzeugt anstatt korrigiert wird.

Nach einer Ausführungsform werden die Auftretenshäufigkeiten der Wörter des Textes von dem Sprache-zu-Text-Umwandlungssystem berechnet und zusammen mit dem Text von dem Sprache-zu-Text- Umwandlungssystem an die Kontrollsoftware zurückgegeben. Beispielsweise kann das Sprache-zu-Text-Umwandlungssystem Hidden Markov Modelle (HMMs) verwenden, um die Auftretenswahrscheinlichkeit eines bestimmten Wortes im Kontext eines Satzes zu berechnen. Zusätzlich oder alternativ dazu kann das Sprache-zu-Text-Umwandlungssystem die Auftretenshäufigkeit eines Wortes gleichsetzen mit der Auftretenshäufigkeit des Wortes in einem großen Referenzkorpus. Beispielsweise kann die Gesamtheit der Texte einer Zeitung über mehrere Jahre oder ein sonstiger großer Datensatz an Texten als Referenzkorpus dienen. Das Verhältnis der gezählten Anzahl der Wörter in dem Korpus zur Gesamtheit der Worte in dem Korpus ist die in diesem Referenzkorpus beobachtete Auftretenshäufigkeit dieses Wortes. Die Häufigkeitsangaben können von dem Sprache-zu-Text-Umwandlungssystem zusammen mit dem Text an die Kontrollsoftware gesendet werden.

Nach einer weiteren Ausführungsform werden die Auftretenshäufigkeiten der Wörter des Textes von der Kontrollsoftware oder der Korrektursoftware nach Erhalt des Textes berechnet. Wie bereits zuvor beschrieben kann die Berechnung der Auftretenswahrscheinlichkeiten der einzelnen Wörter oder Ausdrücke mittels HMMs unter Berücksichtigung des Textkontexts eines Wortes oder anhand der Häufigkeiten des Wortes in einem Referenzkorpus erfolgen. Als Referenzkorpus kann beispielsweise die Gesamtheit der von dem Sprache-zu-Text-Umwandlungssystem bisher an die Kontrollsoftware oder Korrektursoftware übermittelten Texte verwendet werden.

Somit erfolgt nach Ausführungsformen die Berechnung der Häufigkeitsangaben (z.B. durch die Kontrollsoftware oder die Korrektursoftware) mittels eines Hidden-Markov-Modells. Beispielsweise kann die erwartete Auftretenshäufigkeit, also die Auftretenswahrscheinlichkeit, als Produkt aus den Emissionswahrscheinlichkeiten der einzelnen Wörter einer Wortsequenz berechnet werden wie z.B. in B. Cestnik "Estimating probabilities: A crucial task in machine learning" In Proceedings of the Ninth European Conference on Artificial Intelligence, Seiten 147-150, Stockholm, Schweden, 1990 beschrieben.

Nach Ausführungsformen der Erfindung empfängt das Programm, das die Textkorrektur durchführt, neben dem Text auch Part-of-Speech-Tags (POS Tags) - für zumindest einige der Wörter in dem Text, der von dem Sprach-zu-Text-Umwandlungssystem aus dem Sprachsignal erzeugt wurde. Die POS Tags werden von dem Sprache-zu-Text-Umwandlungssystem von der Kontrollsoftware direkt oder von der Korrektursoftware über den Umweg der Kontrollsoftware empfangen und beinhalten zumindest Tags für Substantiv, Adjektiv und Verb. Es ist auch möglich, dass die POS Tags zusätzliche Arten syntaktischer oder semantischer Tags beinhalten. Die genaue Zusammensetzung der berücksichtigten POS Tags kann auch von der jeweiligen Sprache abhängen. In der Zuordnungstabelle sind die fachsprachlichen Wörter zusammen mit deren POS Tags verknüpft gespeichert. Bei der Erzeugung des korrigierten Textes werden nur diejenigen Wörter des Zielvokabulars in dem empfangenen Text durch fachsprachliche Wörter gemäß der Zuordnungstabelle ersetzt, deren POS-Tags übereinstimmen.

Dies kann vorteilhaft sein, da die Genauigkeit des Textkorrekturschrittes dadurch erhöht wird. Von der Korrektheit der POS Tags in der Zuordnungstabelle kann ausgegangen werden, da die Einträge in der Tabelle semi-automatisch erstellt werden dadurch, dass ein oder mehrere Sprecher ein fachsprachliches Wort oder einen fachsprachlichen Ausdruck in ein Mikrofon eingeben, das dadurch resultierende Audiosignal von dem Sprach-zu-Text-Umwandlungssystem in ein (fehlerhaftes) Wort oder in einen (fehlerhaften) Ausdruck des Zielvokabulars umgesetzt wird und dieses fehlerhafte Wort bzw. dieser fehlerhafte Ausdruck in der Zuordnungstabelle mit dem fachsprachlichen Ausdruck verknüpft gespeichert wird. Da bekannt ist, wofür das fachsprachliche Wort steht und ob es beispielsweise ein Substantiv, Verb oder Adjektiv ist, kann der fachsprachliche Ausdruck bei der Gelegenheit der Erzeugung oder Aktualisierung der Tabelle auch gleich mit dem korrekten POS Tag verknüpft gespeichert werden. Wenn also gemäß der Zuordnungstabelle zwar ein bestimmtes Wort und ein bestimmter Ausdruck in dem Text durch ein fachsprachliche Wort ersetzt werden muss, die POS Tags des zu ersetzenden Texts aber nicht mit dem POS Tag der fachsprachlichen Wörter übereinstimmen, ist das ein Hinweis darauf, dass die entsprechenden Wörter in dem Text möglicherweise doch richtig sein könnten. Die Erkennungsrate der POS Tags ist vergleichsweise hoch, sodass durch diese Maßnahme die Qualität des Korrekturschritts erhöht werden kann. Beispielsweise kann es sein, dass ein fachsprachliches Wort z.B. der Handelsname "Platilon^{®}" ist. Er bezeichnet thermoplastische Polyurethan-Folien der Firma Covestro. In der Tabelle ist diesem Fachwort ein POS-Tag "Substantiv" zugeordnet. Von dem Sprach-zu-Text-Umwandlungssystem ist bekannt, dass diese das gesprochene Wort "Platilon" oftmals fälschlicherweise das Zielvokabularwort "Platin" umgewandelt hat, deswegen ist in der Zuordnungstabelle dem Fachwort "Platilon" das Wort "Platin" des Zielvokabulars zugeordnet. Bei einer aktuellen Spracheingabe eines Nutzers wurde das Wort jedoch adjektivisch verwendet: "Zugabe eines Platin- oder Zinkbasierten Katalysators [...]". Anhand des POS Tags von "Platin" in dem vom Umwandlungssystem zurückgegebenen Text kann hier ggf. erkannt werden, dass das Wort "Platin" hier korrekt ist und nicht durch "Platilon" ersetzt werden soll.

Nach Ausführungsformen wird die Kontrollsoftware als Cloud-Dienst von einem Cloudcomputersystem oder einem einzelnen Servercomputersystem bereitgestellt. Bei diesem Cloudcomputersystem bzw. Serversystem kann es sich z.B. um ein System handeln, welches von dem Betreiber des Labors, z.B. einer Universität oder einer Firma, betrieben wird.

Nach einer Ausführungsform führt die Kontrollsoftware die Textkorrektur selbst durch oder in Interoperation mit einem lokal auf dem gleichen Rechner wie die Kontrollsoftware installierten Programm.

Nach einer anderen Ausführungsform wird die Korrektur des von dem Sprache-zu-Text-Umwandlungssystem empfangenen Textes durch einen anderen Rechner, der über ein Netzwerk mit dem Rechner der Kontrollsoftware verbunden ist, durchgeführt. Bei dem anderen Rechner kann es sich z.B. um ein Cloudsystem oder einen einzelnen Server handeln, welches bzw. welcher z.B. ebenfalls von dem Betreiber des Labors betrieben wird. Die Kontrollsoftware sendet den empfangenen Text an die Software und den Rechner, durch welche die Korrektur auf Basis der Zuordnungstabelle durchgeführt wird, und empfängt den korrigierten Text von dieser Software bzw. diesem Rechner ("Korrektursoftware" bzw. "Korrekturrechner"). Bei dem Netzwerk, das die Kontrollsoftware mit der entfernten Korrektursoftware verbindet kann es sich z.B. um das Internet oder das Intranet einer Organisation handeln. Diese Ausführungsform kann vorteilhaft sein, da eine bessere Trennung der Zugriffsrechte auf die Funktionen und Daten der Kontrollsoftware einerseits und der Korrektursoftware andererseits möglich sind. Wird die Textkorrektur auf einem separaten Korrekturrechner bzw. Korrektur-Cloudsystem ausgeführt, kann einem Nutzer hier zum Zwecke der Aktualisierung der Tabelle Zugriff selektiv auf den Korrekturrechner bzw. das Korrektur-Cloudsystem gewährt werden, ohne dass hierdurch auch Zugriff auf sensible Daten der Kontrollsoftware, welche z.B. sensible Funktionen von Laborgeräten kontrollieren kann, eingeräumt wird bzw. werden muss.

Nach Ausführungsformen der Erfindung wird somit Koordination des Datenaustausches mit dem Sprache-zu-Text-Umwandlungssystem, die Textkorrektur und die Weitergabe des korrigierten Textes an das Ausführungssystem vollständig von der Kontrollsoftware durchgeführt oder von dieser organisiert und koordiniert. Das portable Gerät ist nach manchen Ausführungsformen des Verfahrens also im Wesentlichen ein Gerät mit Mikrophon und optionaler Ausgabeschnittstelle für Ergebnisse der Ausführung des korrigierten Textes.

Nach Ausführungsformen der Erfindung ist das Sprach-zu-Text-Umwandlungssystem als Dienst implementiert, welcher über das Internet an eine Vielzahl von Endgeräten bereitgestellt wird. Beispielsweise kann es sich bei dem Sprach-zu-Text-Umwandlungssystem um ein Cloud-Computersystem mit Googles Cloud-Dienst "Speech-to-Text" handeln. Dies kann vorteilhaft sein, da hierfür eine funktional mächtige API Client Bibliotheken vorhanden ist, z.B. für .NET.

Das portable Gerät kann eine Clientsoftware, die zum Datenaustausch mit der Kontrollsoftware vorkonfiguriert ist, beinhalten. Das bedeutet, dass die Clientsoftware auf dem portablen Gerät dazu konfiguriert ist, das Sprachsignal an die Kontrollsoftware über ein Netzwerk zu senden, sodass die Kontrollsoftware die Umsetzung des Sprachsignals in Text und die fachsprachliche Korrektur des Textes sowie die Ausführung einer Funktion gemäß des korrigierten Textes veranlassen kann. Das Ergebnis der Ausführung des korrigierten Texts kann von dem portablen Gerät in Antwort auf das Senden des Sprachsignals empfangen und über den Lautsprecher ausgegeben werden.

Nach Ausführungsformen der Erfindung stellen die in der Zuordnungstabelle gespeicherten Wörter und Ausdrücke der Zielsprache fehlerhafte Textausgaben des Sprache-zu-Text-Umwandlungssystems dar, welche erzeugt wurden auf Basis von Spracheingaben von Fachworten durch eine Vielzahl unterschiedlicher Personen.

Nach Ausführungsformen der Erfindung umfasst das Verfahren Schritte zur Erzeugung der Zuordnungstabelle. Für jedes von einer Vielzahl fachsprachlicher Wörter wird zumindest ein Referenz-Sprachsignal aufgezeichnet, welches selektiv dieses fachsprachliche Wort wiedergibt. Das Referenz-Sprachsignal stammt von zumindest einem Sprecher. Auch für fachsprachliche Ausdrücke kann jeweils zumindest ein Referenz-Sprachsignal, welches selektiv diesen fachsprachlichen Ausdruck wiedergibt, von zumindest einem Sprecher gesprochen und aufgezeichnet werden. Die weiteren Schritte sind für Wörter und Ausdrücke im Wesentlichen identisch, sodass im Folgenden, wenn von einem fachsprachlichen Wort die Rede ist, ein fachsprachlicher Ausdruck mitinbegriffen ist. Jedes der aufgezeichneten Referenz-Sprachsignale wird in das Sprach-zu-Text-Umwandlungssystem eingegeben. Die Eingabe kann insbesondere über ein Netzwerk, z.B. das Internet, erfolgen. Für jedes der eingegebenen Referenz-Sprachsignale empfängt das Gerät, welches die Referenzsignale eingegeben hat, zumindest ein Wort des Zielvokabulars, welches von dem Sprach-zu-Text-Umwandlungssystem aus dem eingegebenen Referenz-Sprachsignal erzeugt wurde. Bei diesem Gerät kann es sich z.B. um ein beliebiges Datenverarbeitungssystem mit einem Mikrophon und Verbindung zu dem Sprache-zu-Text-Umwandlungssystem handeln. Vorzugsweise erfolgt die Eingabe der Referenz-Sprachsignale über ein Gerät, das im Hinblick auf den Typ seines Mikrophons und/oder seiner Positionierung relativ zu Geräuschquellen dem portablen Gerät möglichst ähnlich ist um sicherzustellen, dass reproduzierbar die gleichen Fehler erzeugt werden. Das zumindest eine Wort (das auch ein Ausdruck sein kann) des Zielvokabulars, das für jedes der fachsprachlichen Wörter empfangen wird, repräsentiert eine Fehlumwandlung, da das Zielvokabular der Sprach-zu-Text-Umwandlungssystem die fachsprachlichen Wörter nicht unterstützt. Schließlich wird die Zuordnungstabelle als eine Tabelle erzeugt, die jedem der fachsprachlichen Wörter, für welche zumindest ein Referenz-Sprachsignal aufgezeichnet wurde, das zumindest eine Wort des Zielvokabulars in Textform zuordnet, welches von dem Sprach-zu-Text-Umwandlungssystem aus für dieses fachsprachliche Wort zurückgegeben wurde.

Dies kann vorteilhaft sein, da eine Tabelle sehr einfach modifiziert und ergänzt werden kann, ohne einen Quellcode verändern, ein Programm neu kompilieren oder ein neuronales Netz neu trainieren zu müssen. Sogar falls ein anderes Sprache-zu-Text-Umwandlungssystem verwendet wird, muss nur die entsprechende Client-Schnittstelle angepasst werden und die fachsprachlichen Ausdrücke der Tabelle erneut von ein oder mehreren Sprechern über ein Mikrofon eingegeben und an das neue Sprache-zu-Text-Umwandlungssystem übertragen werden. Die von diesem neuen System zurückgegebenen falschen Wörter und Ausdrücke der Zielsprache bilden die Grundlage für die neue Zuordnungstabelle. Es ist somit möglich, ohne tiefgreifende oder komplexe Änderungen und ohne Neutrainieren einer Sprachsoftware beliebige alltagssprachliche Sprache-zu-Text-Umwandlungssystem funktional so zu erweitern, dass auch gesprochene Texte mit fachsprachlichen Wörtern und Ausdrücken korrekt zu Text umgesetzt werden.

Die Zuordnungstabelle kann beispielsweise als Tabelle einer relationalen Datenbank oder als tabulatorgetrennte Textdatei oder als eine andere funktional vergleichbare Datenstruktur gespeichert sein.

Nach Ausführungsformen der Erfindung werden für jedes von zumindest einigen der fachsprachlichen Wörter (bzw. fachsprachlichen Ausdrücke) mehrere Referenz-Sprachsignale jeweils von unterschiedlichen Sprechern aufgezeichnet. Die mehreren Referenz-Sprachsignale geben dieses fachsprachliche Wort (bzw. diesen fachsprachlichen Ausdruck) wieder. Die Zuordnungstabelle ordnet jedem von zumindest einigen der fachsprachlichen Wörter (oder Ausdrücke) mehrere Wörter (oder Ausdrücke) des Zielvokabulars in Textform zu. Die mehreren Wörter (oder Ausdrücke) des Zielvokabulars repräsentieren Fehlumwandlungen, die das Sprach-zu-Text-Umwandlungssystem für die verschiedenen Sprecher in Abhängigkeit von deren Stimme erzeugt hat.

Beispielsweise kann ein bestimmtes fachsprachliches Wort wie "1,2-Methylendioxybenzol" von 100 unterschiedlichen Personen vorgelesen und mit einem Mikrofon jeweils als Referenz-Sprachsignal aufgezeichnet werden. Vorzugsweise handelt es sich bei diesen Personen um solche, die mit der Aussprache chemischer Ausdrücke vertraut sind. Es liegen dann also 100 Referenz-Sprachsignale für diesen einen Substanznamen vor. Jedes dieser 100 Referenz-Sprachsignale wird an das Sprache-zu-Text-Umwandlungssystem gesendet und es werden in Antwort darauf 100 Wörter oder Ausdrücke des Zielvokabulars zurückgegeben, welche alle den eigentlichen fachsprachlichen Namen nicht korrekt wiedergeben. Oftmals werden die 100 zurückgegebenen Wörter identisch sein, jedoch nicht immer. Unterschiedliche Personen haben unterschiedliche Stimmen, d. h., die Spracheingabe unterscheidet sich im Hinblick auf Betonung, Lautstärke, Stimmhöhe und Artikuliertheit. Deshalb ist es möglich, dass ein bestimmtes Sprache-zu-Text-Umwandlungssystem für ein bestimmtes fachsprachliches Wort (oder einen bestimmten fachsprachlichen Ausdruck) mehrere unterschiedliche, falsche Wörter oder Ausdrücke zurückgibt, welche alle in die Zuordnungstabelle eingehen.

Die Berücksichtigung der Spracheingaben vieler unterschiedlicher Personen für die Erstellung der Zuordnungstabelle kann vorteilhaft sein, da hierdurch die Variabilität menschlicher Stimmen besser berücksichtigt wird und so eine verbesserte Fehlerkorrekturrate erreicht werden kann.

Nach Ausführungsformen der Erfindung ist das das zumindest eine Laborgerät eine Vielzahl von Laborgeräten. Die Laborgeräte sind jeweils ausgewählt aus einer Gruppe umfassend:
- eine Analysestation, die dazu ausgebildet ist, chemischen Substanzen oder Substanzmischungen zu analysieren; und/oder
- eine Synthesestation, die dazu ausgebildet ist, eine Synthese von chemischen Substanzen oder Substanzmischungen durchzuführen; und/oder
- eine Vor- oder Nachbearbeitungsstation, die dazu ausgebildet ist, eine chemische Substanz vor oder nach einem Analyse- oder Syntheseschritt aufzureinigen, mit anderen Substanzen zu kombinieren, zu verdünnen, aufzukonzentrieren oder auf sonstige Weise so zu modifizieren, dass ein nachfolgender Arbeits- oder Transportschritt möglich ist.

Nach Ausführungsformen der Erfindung ist das das zumindest eine Laborgerät eine Vielzahl von Laborgeräten, welche jeweils als Bearbeitungsstationen einer chemischen Substanz dienen. Die Laborgeräte und optional auch das zumindest eine Labor-Softwaremodul kann Bestandteil einer Laboranlage sein, welche zusätzlich auch eine Transporteinheit umfasst. Die Transporteinheit ist dazu ausgebildet, die für eine Synthese oder Analyse verwendeten Substanzen zu den Bearbeitungsstationen zu transportieren, um den Bearbeitungsstationen jeweils zu ermöglichen, die Substanzen zumindest einem Bearbeitungsschritt zu unterziehen.

Nach Ausführungsformen der Erfindung ist das umfasst das Laborsystem ferner einen Hauptsteuerungsrechner einer Laboranlage, die das zumindest eine Laborgerät umfasst. Der Hauptsteuerungsrechner beinhaltet eine Steuersoftware, die dazu konfiguriert ist, die Bearbeitungsschritte und den Transport der chemischen Subtanzen basierend auf Instruktionen in Form eines strukturierten Textes durch die Laborgeräte der Laboranlage zu orchestrieren.

Nach Ausführungsformen der Erfindung umfasst die Kontrollsoftware einen NLP-Prozessor (NLP = Natural Language Processing) oder ist mit einem über ein Netzwerk verbundenen NLP-Prozessor interoperabel. Dass eine Softwareapplikation mit einer anderen Softwareapplikation interoperabel ist bedeutet hier, dass die Schnittstellen und Routinen der beiden interoperablen Softwareapplikationen so aufeinander abgestimmt und einander angepasst sind, dass beide eine in koordinierter Weise zusammen Anfragen, Steuerbefehle und Daten so austauschen können, dass durch diesen koordinierten Austausch eine bestimmte softwarebasierte Funktion durchgeführt und deren Ergebnis an die anfragende Softwareapplikation zurückgegeben wird. Die Kontrollsoftware ist dazu konfiguriert, den NLP-Prozessor zu verwenden, um den korrigierten Text in einen strukturierten Text zu transformieren, welcher von einem Zielsystem interpretiert werden kann. Bei dem Zielsystem handelt es sich um das zumindest eine Labor-Softwaremodul, und/oder das zumindest eine Laborgerät und/oder eine Steuersoftware eines Hauptsteuerungsrechners einer Laboranlage, die das zumindest eine Laborgerät umfasst. Die Kontrollsoftware ist dazu konfiguriert, den strukturierten Text, der von dem NLP Prozessor aus dem korrigierten Text gebildet wurde, vom NLP Prozessor zu empfangen und in das Zielsystem einzugeben. Die Eingabe des strukturierten Texts in das Zielsystem veranlasst dieses dazu, eine laborbezogene Software- und/oder Hardwarefunktion auszuführen.

Beispielsweise beschreiben M. Hummel, D. Porcincula und E. Sapper im European Coatings Journal (01.02.2019) im Artikel "NATURAL LANGUAGE PROCESSING. A semantic framework for coatings science - robots reading recipes" eine Überführung natürlichsprachlicher Texteingaben in strukturierten Text mittels Syntaxparsern, POS-Tagging und anderen Techniken.

Beispielsweise kann das Zielsystem das zumindest eine Laborgerät und eine Transporteinheit sein, welche durch die Eingabe des strukturierten Textes dazu veranlasst werden, eine Vielzahl von Bearbeitungsschritten und den Transport der chemischen Subtanzen zwischen den Laborgeräten entsprechend den in dem strukturierten Text enthaltenen Angaben durchzuführen.

Nach einem anderen Beispiel ist das Zielsystem eine Steuerungssoftware einer Laboranlage und die Eingabe des strukturierten Textes veranlasst diese dazu, eine Softwarefunktion entsprechend den in dem strukturierten Text enthaltenen Angaben durchzuführen. Bei der Softwarefunktion kann es sich z.B. um die Berechnung bestimmter Konzentrationen oder sonstiger Parameter handeln, die im Zuge der Durchführung bestimmter, im Text definierter Analysen und/oder Synthesen verwendet werden, z.B. um ein Laborgerät entsprechend zu konfigurieren oder kalibrieren oder pH Werte und Viskositäten einzustellen.

Nach einem anderen Beispiel ist das Zielsystem eine chemische Datenbank der Laboranlage, welche Ergebnisse von Analysen und Synthese, die von der Anlage bereits durchgeführt wurden, enthält. Die Eingabe des strukturierten Textes veranlasst diese dazu, eine Datenbankrecherche nach den in dem strukturierten Text enthaltenen Angaben und Begriffen durchzuführen. Die Rechercheergebnisse können direkt als Ergebnis über die Kontrollsoftware an den Nutzer zurückgegeben werden oder als Eingabe für weitere Datenverarbeitungsschritte, z.B. zur Simulation und Vorhersage vorteilhafter Rezepturen basierend auf den recherchierten Substanzen beinhalten.

Nach Ausführungsformen beinhaltet das Laborsystem eine chemische Anlage zur Analyse und/oder Synthese chemischer Stoffe und/oder um eine Anlage für die Erzeugung von Substanzmischungen, insbesondere von Farben und Lacken. Die Anlage beinhaltet auch den Hauptsteuerungsrechner mit der Steuerungssoftware. Das zumindest eine Laborgerät und das zumindest eine Labor-Softwaremodul sind Bestandteil der Hochdurchsatzanlage und können von der Kontrollsoftware über die Steuerungssoftware kontrolliert und gesteuert werden. Die Anlage ist dazu ausgebildet, den korrigierten Text als Spezifikation der Synthese oder als Spezifikation der Komponenten der Substanzmischung oder als Spezifikation der durchzuführenden Analyse zu interpretieren.

Bei der Anlage kann es sich um eine Hochdurchsatzanlage (HTE-Anlage) handeln, z.B. um eine Hochdurchsatzanlage zur Analyse und Herstellung von Farben und Lacken handeln. Beispielsweise kann die HTE-Anlage ein System zum automatischen testen und zur automatischen Herstellung chemischer Produkte sein wie es in der WO 2017/072351 A2 beschrieben ist.

Die Ausgabe des korrigierten Textes oder eines strukturierten Textes, in welchen der korrigierte Text konvertiert wurde, an die Steuerungssoftware der Anlage bewirkt, dass die Steuerungssoftware ein oder mehrere Laborgeräte und/oder ein oder mehrere Labor-Softwaremodule der Anlage so steuert, wie dies in dem korrigierten Text spezifiziert ist. Dies kann insbesondere im Kontext eines biologischen oder chemischen Labors sehr vorteilhaft sein, da die Spracheingabe so verarbeitet wird, dass diese direkt an ein technisches System weitergegeben und von diesem korrekt interpretiert werden kann, ohne dass der Nutzer hierfür beispielsweise Handschuhe ausziehen muss. Beispielsweise kann es sich bei dem Laborgerät um ein Gerät zur Bestimmung der Ölzahl eines Pigments oder ein Gerät zur Bestimmung der Viskosität eines Lacks handeln.

Das Anlage kann beispielsweise dazu ausgebildet sein, einen oder mehrere der folgenden Arbeitsschritte vollautomatisch in Reaktion auf eine Eingabe des korrigierten Textes oder des daraus gewonnenen strukturierten Textes über eine Maschine-Maschine Schnittstelle automatisch durchzuführen:
- rheologische Analysen von Substanzen und Substanzmischungen;
- Messung der Lagerstabilität von Substanzen und Substanzmischungen, insbesondere anhand von Inhomogenitäten und Absetzungsneigung von flüssigen Substanzmischungen; Beispielsweise können diese Analysen anhand optischer Messungen in Küvetten nach Probenahme erfolgen;
- pH-Wert Bestimmung von Substanzen und Substanzmischungen;
- Schaumtests von Substanzen und Substanzmischungen, insbesondere Messung der Entschäumungswirkung und Messung der Schaumabbaukinetik;
- Viskositätsmessungen von Substanzen und Substanzmischungen; die Viskositätsmessung kann insbesondere bei hochviskosen Substanzen bzw. Mischungen einen automatischen Verdünnungsschritt beinhalten da die Viskosität in einer verdünnten Lösung leichter bestimmbar ist; auf Basis der Viskosität der verdünnten Lösung wird die Viskosität der ursprünglichen Substanz bzw. Substanzmischung berechnet;
- Messung des Rub-out Verhaltens (Abriebtest) der Substanz bzw. der Substanzmischung, insbesondere des fertigen Produkts;
- Messung von Farbwerten von Substanzen und Substanzmischungen anhand beispielsweise eines mit Lichtstreuung arbeitenden Spektralphotometers (sog. L-A-B Wert), Haze und Gloss
- Schichtdickenmessung von Substanzen und Substanzmischungen, die auf einer Ebene aufgetragen wurden unter verschiedenen definierten Parametern (Temperatur, Luftfeuchte, Oberflächenbeschaffenheit der Ebene, etc.)
- Bildanalyseverfahren von Bildern von Substanzen und Substanzmischungen, insbesondere zur Charakterisierung von Substanzoberflächen, z.B. Anzahl, Größe und Verteilung von Luftblasen oder Kratzern in Farben und Lacken.

Bei den Substanzen und Substanzmischungen kann es sich insbesondere um Substanzen und Substanzmischungen, die zur Herstellung von Farben und Lacken dienen, handeln. Außerdem kann es sich bei den Substanzen und Substanzmischungen um die Endprodukte, z.B. Farben und Lacke in flüssiger wie getrockneter Form, sowie Zwischenprodukte und verwendete Lösungsmittel handeln.

Nach Ausführungsformen der Erfindung umfasst die eingriffsfreie Bedienung eine Umwandlung der Spracheingabe in einen natürlichsprachigen Text.

Das zumindest einen Labor-Softwaremodul kann z.B. als chemische Substanzdatenbank ausgebildet sein, die dazu ausgebildet ist, den eingegebenen Text als Sucheingabe zu interpretieren und Informationen zu der Sucheingabe in der Datenbank zu ermitteln und an die Kontrollsoftware als Ergebnis zurückzugeben. Bei der Datenbank kann es sich insbesondere um ein Datenbankmanagementsystem (DBMS), z.B. MySQL oder PostgreSQL handeln.

Zusätzlich oder alternativ dazu kann das Laborsystem ein Labor-Softwaremodul enthalten, welches eine Simulationssoftware ist. Die Simulationssoftware ist dazu ausgebildet, Eigenschaften von chemischen Erzeugnissen, insbesondere von Lacken und Farben, basierend auf einer vorgegebenen Substanzmischungsspezifikation zu simulieren. Die Simulationssoftware ist dazu ausgebildet, den eingegebenen Text als Spezifikation des Erzeugnisses, dessen Eigenschaften simuliert werden soll, zu interpretieren.

Zusätzlich oder alternativ dazu kann das Laborsystem ein Labor-Softwaremodul enthalten, das als eine Steuersoftware einer Laboranlage, die das zumindest eine Laborgerät enthält, ausgebildet ist. Die Steuersoftware ist auf einem Hauptsteuerungsrechner installiert. Beispielsweise kann es sich hierbei um die hier bereits für Ausführungsformen beschriebene Steuerungssoftware handeln. Die Steuerungssoftware ist dazu ausgebildet, die Laborgeräte und eine Transporteinheit der Laboranlage dazu zu veranlassen, eine Vielzahl von Bearbeitungsschritten und den Transport der chemischen Substanzen zwischen den Laborgeräten entsprechend den in dem eingegebenen Text enthaltenen Angaben durchzuführen und zu orchestrieren. Die Laboranlage kann als eine HTE-Anlage für die Steuerung chemischer Analysen und/oder Synthesen und/oder der Erzeugung von Substanzmischungen, insbesondere von Farben und Lacken, ausgebildet sein. Die Steuerungssoftware ist dazu ausgebildet, den korrigierten Text oder einen aus diesem extrahierten strukturierten Text als Spezifikation einer Analyse oder der Synthese oder der Komponenten der Substanzmischung zu interpretieren.

Zusätzlich oder alternativ dazu kann die Laboranlage ein Labor-Softwaremodul enthalten, das dazu ausgebildet ist, einfache Datenverarbeitungsschritte von Daten durchzuführen, im Kontext einer Analyse oder Synthese zwischen Komponenten des Laborsystems ausgetauscht werden. Dabei kann es sich beispielsweise um die Konvertierung, Prüfung und/oder Ergänzung von Steuerbefehlen von der Steuersoftware an die Laborgeräte, eine Speicherung, Prüfung, oder Normalisierung von Messdaten oder ähnliche Datenverarbeitungsschritte handeln.

Der in das Laborgerät oder Labor-Softwaremodul jeweils eingegebene Text kann der korrigierte Text sein oder ein strukturierter Text, den ein NLP-Prozessor aus dem korrigierten Text erzeugt hat.

Nach Ausführungsformen ist die Kontrollsoftware dazu konfiguriert, zumindest manche korrigierten Texte, z.B. Texte die ein bestimmtes Schlüsselwort wie "Internetsuche" enthalten, als Eingabe für eine Internet-Suchmaschine zu verwenden. Die Kontrollsoftware empfängt die Ergebnisse der Suche, z.B. durch Parsen eines Browserfensters, und leitet die Ergebnisse zur Ausgabe an ein Zielsystem in der Nähe des Nutzers weiter, beispielsweise an das portable Gerät mit dem Lautsprecher

Nach Ausführungsformen der Erfindung beinhaltet die Kontrollsoftware ein Register mit den Accounts einer Vielzahl von bei der Kontrollsoftware registrierten Nutzern. Die Kontrollsoftware beinhaltet eine Stimmerkennungsfunktion zur Erkennung jedes der registrierten Nutzer anhand dessen Stimme. Die Kontrollsoftware ist dazu ausgebildet, dem Nutzer die eingriffsfreie Bedienung nur desjenigen Laborgeräts und/oder desjenigen Labor-Softwaremoduls durch Spracheingabe in das Mikrophon zu ermöglichen, zu deren Bedienung dieser Nutzer berechtigt ist.

Dies kann vorteilhaft sein, da Zugangskontrolle und Steuerung der Laborgeräte und Labor-Softwaremodule nahtlos miteinander verwoben sind, indem beides von der Stimme eines Nutzers abhängig gemacht wird. Es ist nicht nötig, Passwörter oder spezielle Zugriffstoken zu merken oder sicher zu verwahren.

Gemäß Ausführungsformen der Erfindung ermöglicht die Kontrollsoftware es einem Nutzer durch Eingabe von Schlüsselbegriffen als Bestandteil der Spracheingabe, insbesondere Laborgerätenamen und/oder Raumnamen, ein Laborgerät aus einer Vielzahl von Laborgeräten auszuwählen und selektiv dessen Funktionen durch die Spracheingabe zu steuern. Beispielsweise ist die Kontrollsoftware dazu konfiguriert, den korrigierten Text nach vordefinierten Schlüsselbegriffen zu analysieren. Wird ein Schlüsselbegriff erkannt, leitet die Kontrollsoftware den korrigierten Text als natürlichsprachiger Text oder strukturierten Text an genau dieses erkannte Laborgerät oder dessen Steuersoftware weiter. Dies kann vorteilhaft sein, da mittels der gleichen sprachbasierten Schnittstelle eine Vielzahl unterschiedlicher Laborgeräte gesteuert werden kann.

Nach Ausführungsformen der Erfindung ist die Kontrollsoftware dazu konfiguriert, den korrigierten Text, der basierend auf der Spracheingabe des Nutzers erstellt wird, automatisch in eine Struktur zu überführen, die von dem jeweils als Zielsystem für diese Texteingabe vorgesehenen Zielsystem richtig interpretiert werden kann. Beispielsweise erkennt die Kontrollsoftware dynamisch, dass der Nutzer in der Spracheingabe durch Nennung des Namens eines bestimmten Laborgeräts oder einer Laboranlage diese als Zielsystem aus einer Vielzahl verfügbarer Zielsysteme ausgewählt hat, um eine bestimmte Funktion durchzuführen. Die Kontrollsystem hat für jedes der Zielsysteme ein Format gespeichert, welches als Eingabeformat von dem jeweiligen Zielsystem benötigt wird und überführt den korrigierten Text oder den daraus gewonnenen strukturierten Text automatisch in das benötigte Format des dynamisch erkannten Zielsystems. Beispielsweise kann ein erstes Laborgerät bestimmte Parameter in Form einer XML Datei als Eingabe erfordern. Ein anderes besitzt einen NLP Prozessor und kann den korrigierten Text direkt als Eingabe nutzen. Ein weiteres Laborgerät benötigt bestimmte Parameterwerte oder Rezepturen in tabellarischer Form. Dies kann vorteilhaft sein, da der Nutzer eine Spracheingabe in der normalen Syntax natürlichsprachige Sätze eingeben kann. Der Nutzer muss sich also nicht erst mühsam die erforderliche Syntax der einzelnen Laborgeräte einprägen und mit jedem einzelnen Gerät "anders" sprechen. Eine spezielle Anpassung der Sprachstruktur des Nutzers an das Vokabular oder die Syntax der jeweiligen Laborgeräte ist somit nicht erforderlich. Der Nutzer kann seine Eingabe in der ihm gewohnten Sprachsyntax eingeben, die er auch im Gespräch mit Kollegen verwenden würde. Die Anpassung an die speziellen Erfordernisse der Schnittstellen der einzelnen Laborgeräte wird von der Kontrollsoftware vorgenommen.

In einem weiteren Aspekt betrifft die Erfindung ein Verfahren zur Steuerung eines Laborgeräts und/oder eines Labor-Softwaremoduls. Das Verfahren umfasst:
- Bereitstellung zumindest eines Laborgeräts und zumindest eines Labor-Softwaremodul, wobei das zumindest eine Laborgerät zur Analyse und/oder Synthese einer chemischen Substanz ausgebildet ist, wobei das zumindest eine Labor-Softwaremodul zur Verarbeitung von Daten, die von dem zumindest einen Laborgerät gewonnen wurden, ausgebildet ist;
- Bereitstellung eines Datenverarbeitungsgeräts mit einer Kontrollsoftware, die einem Nutzer eine Schnittstelle zur Bedienung des zumindest einen Laborgeräts und/oder des zumindest einen Labor-Softwaremoduls bereitstellt; und
- Bereitstellung eines portablen Geräts mit Mikrophon, wobei das Gerät über ein Netzwerk mit der Kontrollsoftware interoperabel verbunden ist, wobei das Gerät dazu ausgebildet ist, in Interoperation mit der Kontrollsoftware dem Nutzer eine eingriffsfreie Bedienung des zumindest einen Laborgeräts und/oder des zumindest einen Labor-Softwaremoduls durch Spracheingabe in das Mikrophon zu ermöglichen;
wobei die Kontrollsoftware erfindungsgemäß durchführt:
- Empfang eines Sprachsignals, das das Mikrofon auf Basis der Spracheingabe aufgenommen hat, von dem portablen Gerät, wobei das Sprachsignal von dem Nutzer gesprochene allgemeinsprachliche und fachsprachliche Wörter beinhaltet;
- Eingabe des empfangenen Sprachsignals in ein Sprach-zu-Text-Umwandlungssystem, wobei das Sprach-zu-Text-Umwandlungssystem lediglich die Umwandlung von Sprachsignalen in ein Zielvokabular, welches die fachsprachlichen Wörter nicht beinhaltet, unterstützt;
- Empfang eines Textes, welcher von dem Sprach-zu-Text-Umwandlungssystem aus dem Sprachsignal erzeugt wurde, von dem Sprach-zu-Text-Umwandlungssystem;
- Erzeugen eines korrigierten Textes aus dem empfangenen Text, wobei der korrigierte Text durch die Kontrollsoftware alleine oder durch die Kontrollsoftware in Interpretation mit einer Textkorrektursoftware, mit der die Kontrollsoftware operativ verbunden ist, erzeugt wird, wobei der korrigierte Text durch automatisches Ersetzen von Wörtern und Ausdrücken des Zielvokabulars in dem empfangenen Text durch fachsprachliche Wörter gemäß einer Zuordnungstabelle (238) von Wörtern in Textform erzeugt wird, wobei die Zuordnungstabelle jedem von einer Vielzahl von fachsprachlichen Wörtern zumindest ein Wort aus dem Zielvokabular zuordnet, wobei das einem fachsprachlichen Wort zugeordnete zumindest eine Wort des Zielvokabulars ein Wort oder ein Ausdruck ist, welches das Sprach-zu-Text-Umwandlungssystem fälschlicherweise erkennt, wenn dieses fachsprachliche Wort in Form eines Sprachsignals eingegeben wird; und
- Verwenden des korrigierten Textes um das zumindest eine Laborgerät und/oder das zumindest eine Labor-Softwaremodul dazu zu veranlassen,
- die Analyse, Synthese und/oder die Softwarefunktion gemäß Angaben in dem korrigierten Text auszuführen.

Nach Ausführungsformen beinhaltet die Bereitstellung des Geräts ein Platzieren des portablen Geräts innerhalb des gleichen Raums wie das zumindest eine Laborgerät und/oder in Platzieren des portablen Geräts im gleichen Raum wie ein Hauptsteuerungsrechner einer Laboranlage, die das zumindest eine Laborgerät beinhaltet.

Unter einem "strukturierten Text" wird hier ein Text, insbesondere ein ASCII-Text, verstanden, der Wörter und Ausdrücke einer bestimmten Bedeutung an vordefinierten Positionen beinhaltet. Ein strukturierter Text kann z.B. die Form einer kommaseparierten Datei, einer Tabelle, eines XML Dokuments oder dergleichen haben. Ein strukturierter Text kann von Maschinen und Computern leichter interpretiert und verarbeitet werden als natürlichsprachiger Text.

Unter einem "natürlichsprachigen Text" wird hier ein Text, insbesondere ein ASCII-Text, verstanden, der in einer von Menschen gesprochenen Sprache verfasst ist und typischerweise aus ganzen Sätzen besteht.

Ein "NLP-Prozessor" ist ein Softwareprogramm oder eine Softwarefunktion, die in der Lage ist, "natürlichsprachige" Texte zu verstehen, d.h., so zu verarbeiten, dass die in dem Text enthaltenen, relevanten Informationen aus dem Text extrahiert und optional in andere Formate, z.B. ein strukturiertes Textformat, transformiert werden können. Ein NLP Tool ist also in der Lage, Texte, die aus ganzen Sätzen bestehen, zu verarbeiten sowie Informationen aus einem einzigen Satz zu extrahieren.

Unter einer "Transporteinheit" wird hier automatisches System aus ein oder mehreren Komponenten verstanden, das chemische Substanzen in flüssiger und/oder fester Form und optional auch weitere Objekte wie z.B. Verbrauchsmittel oder Behältnisse von einer Verarbeitungsstation zur nächsten transportieren kann. Die Transporteinheit kann z.B. ein Roboterarm, ein Ensemble aus Roboterarmen, ein Transportband, ein Ensemble aus Transportbändern oder Kombinationen hiervon sein. Die Transporteinheit kann Bestandteil einer Hochdurchsatzanlage sein und kann von einer Steuersoftware kontrolliert werden. Eine Bearbeitungseinheit kann ein Laborgerät zur Analyse oder Synthese chemischer Stoffe sein oder ein Gerät zur Vor- und Nachverarbeitung dieser Stoffe (Verdünnung, Aufkonzentrierung, Färben, Mischen, etc.).

Ein "Sprach-zu-Text-Umwandlungssystem" ist ein Datenverarbeitungssystem, das zur Umwandlung von Sprachsignalen eines Menschen in einen Text. Das Datenverarbeitungssystem kann z.B. aus einer Kombination von Hardware und Software bestehen und z.B. als Cloudcomputersystem oder Servercomputersystem ausgebildet sein, das einen Sprach-zu-Text-Umwandlungsdienst an ein oder mehrere Client-Geräte über ein Netzwerk zur Verfügung stellt.

Eine "eingriffsfreie Bedienung" eines Geräts ist eine Bedienung, welche keine manuelle Interaktion eines Nutzers mit dem Gerät bzw. einer Mensch-Maschine Schnittstelle dieses Gerätes beinhaltet. Es handelt sich also um eine "berührungsfreie", "kontaktlose" Bedienung.

Ein "Einplatinencomputer" oder "Einplatinenrechner" ist ein Computersystem, bei dem sämtliche zum Betrieb nötigen elektronischen Komponenten auf einer einzigen Leiterplatte zusammengefasst sind. Typischerweise ist das Netzteil als einzige Komponente separat untergebracht.

Ein "Sprachsignal" ist ein elektronisches Signal, welches von einem Mikrophon aufgezeichnet wird, wenn ein Mensch eine Spracheingabe in das Mikrophon eingibt.

Ein "virtueller Laborassistent" ist eine Software oder Softwareroutine, welche mit ein oder mehreren in einem Labor befindlichen Laborgeräten und/oder Softwareprogrammen operativ verbunden ist derart, dass Informationen von diesen Laborgeräten und Labor-Softwareprogrammen empfangen und Befehle zur Durchführung von Funktionen von dem Laborassistent an die Laborgeräte und Laborsoftwareprogramme gesendet werden kann. Ein Laborassistent hat also eine Schnittstelle zum Datenaustausch mit und zur Steuerung von ein oder mehreren Laborgeräten und Labor-Softwareprogrammen. Der Laborassistent hat zudem eine Schnittstelle zu einem Nutzer und ist dazu konfiguriert, dem Nutzer über diese Schnittstelle eine erleichterte Nutzung, Überwachung und/oder Kontrolle der Laborgeräte und der Labor-Softwareprogramme zu ermöglichen. Beispielsweise kann die Schnittstelle zu dem Nutzer als akustische Schnittstelle oder natürlichsprachige Textschnittstelle ausgebildet sein.

Vorzugsweise beinhaltet ein "virtueller Laborassistent" Funktionen, um die Interaktion zwischen dem virtuellen Assistenten und dem Menschen möglichst ähnlich zu einer Mensch-Mensch Interaktion zu machen. Beispielsweise kann der virtuelle Laborassistent eine Softwarefunktion zum Vorlesen von Text mit einer weitgehend natürlichen Stimme haben. Der vorgelesene Text kann z.B. die Ergebnisse einer Ausführung einer Funktion beinhalten, die über einen Lautsprecher eines portablen Geräts ausgegeben werden. Zusätzlich oder alternativ dazu kann der virtuelle Laborassistent dazu konfiguriert sein, empfangene Sprachsignale oder aus diesen erzeugte Texte nach Schlüsselwörtern zu durchsuchen und in Abhängigkeit dieser Schlüsselwörter bestimmte Hardware- oder Softwarefunktionen aufzurufen. Beispielsweise kann eines dieser Schlüsselwörter ein Name, z.B. ein üblicher menschlicher Vorname, sein, der von dem virtuellen Laborassistenten als sein eigener Name interpretiert wird und als an ihn gerichteten Befehl verstanden wird, beine bestimmte Funktion auszuführen oder aufzurufen.

Unter einem "Laborgerät" werden hier in einem Labor verwendeten elektronische Geräte verstanden, die zur Durchführung von chemischen Verfahrensschritten wie Synthesen oder Analysen oder sonstigen Verarbeitungsschritten zur Vorbereitung oder Nachbereitung einer Substanz im Hinblick auf den nächsten/vorigen Verarbeitungsschritt verwendet werden.

Unter einer "Laboranlage" wird hier ein aus mehreren Laborgeräten, einer Transporteinheit und ein oder mehreren Softwaremodulen bestehendes System verstanden, welches in der Lage ist, die Laborgeräte und Labor-Softwaremodule in orchestrierter Weise gemeinsam zu steuern um einen chemischen Workflow automatisch oder semi-automatisch durchzuführen. Bei dem Workflow kann es sich z.B. um einen Syntheseworkflow oder einen Analyseworkflow oder eine Kombination aus beiden Workflows handeln.

Unter einem "Labor-Softwaremodul" wird hier eine Softwareapplikation, ein Sub-Modul einer Softwareapplikation oder eine Softwareroutine verstanden, welche dazu konfiguriert ist, Daten, die von einem Laborgerät als Messdaten geliefert oder als Inputparameter verwendet werden, zu verarbeiten. Vorzugsweise ist ein Labor-Softwaremodul physikalischer und/oder funktionaler Bestandteil eines Laborgeräts oder einer Laboranlage.

Unter einem "Vokabular" wird hier ein Sprachraum verstanden, also eine Menge an Wörtern, deren sich eine Entität, z.B. ein Sprache-zu-Text-Umwandlungssystem, bedienen kann.

Unter einem "Wort" wird hier eine zusammenhängende Sequenz von Zeichen verstanden, welche innerhalb eines bestimmten Vokabulars vorkommt und eine selbständige sprachliche Einheit darstellt. In der natürlichen Sprache besitzt ein Wort - im Gegensatz zu einem Laut oder einer Silbe - eine eigenständige Bedeutung.

Unter einem "Ausdruck" wird hier sprachliche Einheit aus zwei oder mehr Wörtern verstanden.

Unter einem "fachsprachlichen Wort" oder "Fachwort" wird hier ein Wort eines Fachwortvokabulars verstanden. Ein fachsprachliches Wort gehört nicht dem Zielvokabular an und ist typischerweise auch kein Bestandteil des allgemeinsprachlichen Vokabulars.

Der Ausdruck, dass ein Sprach-zu-Text-Umwandlungssystem lediglich die Umwandlung von Sprachsignalen in ein Zielvokabular unterstützt bedeutet, dass Wörter eines anderen Vokabulars entweder gar nicht in Text umgesetzt werden können oder nur mit einer sehr hohen Fehlerrate in Text umgesetzt wird, wobei die Fehlerrate über einem Fehlerratengrenzwert pro umzusetzendem Wort oder Ausdruck liegt, der als maximal tolerabel für eine funktionierende Umsetzung von Sprache in Text angesehen werden muss. Beispielsweise kann dieser Grenzwert bei einer Fehlerwahrscheinlichkeit pro Wort oder Ausdruck von über 50%, vorzugsweise schon von über 10% liegen.

Unter einem POS-Tag (oder Part-of-Speech-Tag) wird hier eine spezielle Kennzeichnung ("Label") verstanden, welche jedem Wort in einem Textkorpus zugeordnet ist, um den Teil der Sprache und oft auch andere grammatikalische Kategorien wie Zeitform, Zahl (Plural/Singular), Groß-/Kleinschreibung usw. anzugeben, welchen dieses Wort in seinem jeweiligen Textkontext repräsentiert. Ein Satz aller in einem Corpus verwendeten POS-Tags wird als Tagset bezeichnet. Tagsets für verschiedene Sprachen sind typischerweise unterschiedlich. Grundlegende Tagsets enthalten Tags für die häufigsten Sprachkomponenten (z.B. N für Substantiv, V für Verb, A für Adjektiv usw.).

Unter einem "portablen Gerät" wird hier ein portables, vorzugsweise batteriebetriebenes, Datenverarbeitungsgerät verstanden, das frei positionierbar ist und das mit einem Netzwerk, z.B. dem Internet oder Intranet einer Organisation vorzugsweise kabellos verbindbar ist. Beispielsweise werden sogenannte "Smart-Speaker" mit Mikrofon und/oder Einplatinensysteme wie Raspberry Pi Rechner als "portables Gerät" verwendet. Es ist aber auch möglich, dass ein Nutzer sein Smartphone als portables Gerät verwendet, wobei das Smartphone ein Mikrophon und eine mit der Kontrollsoftware interoperable Clientsoftware aufweist.

### Kurzbeschreibung der Zeichnungen

In den folgenden Abbildungen werden Ausführungsformen der Erfindung in exemplarischer Weise näher erläutert:
- Figur 1: zeigt ein Flussdiagramm eines Verfahrens zum Steuern von Laborgeräten und Labor-Softwaremodulen;
- Figur 2: zeigt ein Blockdiagramm eines verteilten Systems zur sprachbasierten Steuerung von Laborgeräten und Labor-Softwaremodulen;
- Figur 3: zeigt ein Blockdiagramm eines alternativen verteilten Systems zur sprachbasierten Steuerung von Laborgeräten und Labor-Softwaremodulen;
- Figur 4: zeigt ein Blockdiagramm eines weiteren verteilten Systems zur sprachbasierten Steuerung von Laborgeräten und Labor-Softwaremodulen.

### Detaillierte Beschreibung

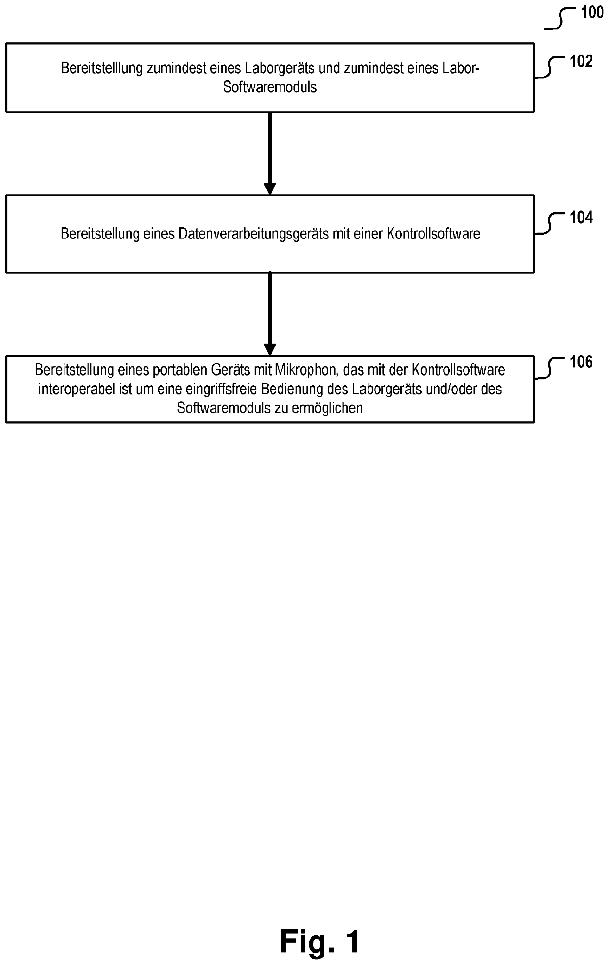

**Figur 1** zeigt ein Flussdiagramm eines computerimplementierten Verfahrens zur sprachbasierten Steuerung von Laborgeräten und Labor-Softwaremodulen.

In einem ersten Schritt 102 erfolgt eine Bereitstellung eines oder mehrerer Laborgeräte und eines oder mehrerer Labor-Softwaremodule.

Bei den Laborgeräten kann es sich um Einzelgeräte handeln oder um Bearbeitungseinheiten innerhalb einer komplexen Laboranlage. Die Laborgeräte können jeweils dazu konfiguriert und ausgestattet sein, ein oder mehrere Arbeitsschritte im Kontext der Analyse und/oder Synthese von Substanzen oder Substanzmischungen oder zu der Vor- und Nachbereitung von Substanzen und Substanzmischungen innerhalb komplexer Analyse- oder Syntheseworkflows durchzuführen.

In analoger weise kann es sich bei den Labor-Softwaremodulen um einzeln installierbare Softwareapplikationen handeln, z.B. um eine Simulationssoftware, die auf Basis von Daten, die von den Laborgeräten gewonnen werden, Aussagen oder Vorhersagen bezüglich deren chemischer, physikalischer, haptischer, optischer oder sonstiger Eigenschaften zu treffen. Es kann sich auch um ein DBMS mit einer Datenbank handeln, wobei die Datenbank die Ergebnisse der bisherigen Analysen und Synthesen der Laborgeräte gespeichert hat und deren Inhalt beispielsweise dazu verwendet werden kann, Datenbankrecherchen nach Substanzen (z.B. Farben und Lacken) durchzuführen, die bereits hergestellt wurden und deren Eigenschaften bekannt sind. Die Suchanfrage kann beispielweise eine Suche nach allen Lacken mit einer Viskosität unterhalb eines in der Suchanfrage spezifizierten Grenzwerts sein. Die Softwaremodule können auch Module und Funktionen einer größeren Softwareapplikation sein, z.B. von einer Steuersoftware einer komplexen Laboranlage.

In einem weiteren Schritt 104 wird ein Datenverarbeitungsgerät mit einer Kontrollsoftware bereitgestellt. Die Kontrollsoftware stellt einem oder mehreren Nutzern eine Schnittstelle zur Bedienung des zumindest einen Laborgeräts und/oder des zumindest einen Labor-Softwaremoduls zur Verfügung. Das Datenverarbeitungsgerät mit der Kontrollsoftware kann sich im gleichen Raum oder Laborbereich befinden wie das Laborgerät oder die Laboranlage, die das Laborgerät beinhaltet. Es kann sich bei dem Datenverarbeitungsgerät z.B. um einen Desktop-Rechner oder einen Server handeln. Vorzugsweise wird das Datenverarbeitungsgerät jedoch in einem anderen Raum, z.B. einem Rechenzentrum der Organisation, die das Labor betreibt, oder im Rechenzentrum eines externen Cloudspeicher-Anbieters eingerichtet. Der Zugang zu diesem Datenverarbeitungsgerät und der Kontrollsoftware z.B. für Wartungszwecke kann aber beispielsweise von einem Rechner innerhalb des Laborbereichs erfolgen.

In Schritt 106 wird ein portables Gerät mit Mikrophon bereitgestellt und so eingerichtet, dass es über ein Netzwerk, z.B. das Internet oder das Intranet der besagten Organisation, mit der Kontrollsoftware verbunden und interoperabel ist. Das Gerät ist dazu ausgebildet, in Interoperation mit der Kontrollsoftware dem Nutzer eine eingriffsfreie Bedienung des zumindest einen Laborgeräts und/oder des zumindest einen Labor-Softwaremoduls durch Spracheingabe in das Mikrophon zu ermöglichen. Die Bereitstellung des portablen Geräts erfolgt vorzugsweise so, dass das Gerät in der Nähe des Arbeitsbereichs eines Laborarbeiters aufgestellt wird, von welchem dieser Laborarbeiter aus das Laborgerät steuern möchte oder wo der Laborarbeiter ansonsten seinen Laborarbeiten nachgeht. Es ist auch möglich, das Gerät mit dem Mikrophon an einer zentralen Stelle innerhalb des Laborbereiches zu positionieren, von welchem aus Spracheingaben aus allen Bereichen des Raums bzw. Laborbereichs vom Mikrophon weitgehend gleichermaßen gut empfangen und aufgezeichnet werden können.

Nach Ausführungsformen beinhaltet die Bereitstellung des Geräts ein Platzieren des portablen Geräts, z.B. eines Einplatinenrechners mit Mikrophon, innerhalb des gleichen Raums wie das zumindest eine Laborgerät und/oder in Platzieren des portablen Geräts im gleichen Raum wie ein Hauptsteuerungsrechner einer Laboranlage, die das zumindest eine Laborgerät beinhaltet.

Die besagten Schritte können in beliebiger Reihenfolge vorgenommen werden. Sie ermöglichen eine eingriffsfreie Bedienung von ein oder mehreren Laborgeräten und damit assoziierter Labor-Softwaremodule per Spracheingabe von beliebigen Bereichen eines Labors aus, ohne dass hierfür Handschuhe ausgezogen werden müssen. Dadurch, dass die Kontrollsoftware das vom Mikrophon aufgezeichnete Sprachsignal von einer Sprach-zu-Text-Umwandlungssystem in einen natürlichsprachlichen Text umwandeln lässt, welcher danach durch spezielle Textkorrekturschritte so korrigiert wird, dass auch die fachsprachlichen Wörter z.B. der chemischen Industrie oder von speziellen Teilbereichen wie etwa der Farb- und Lackherstellung, in der Spracheingabe im Text richtig widergegeben werden.

Die von der Kontrollsoftware, den Laborgeräten und Labor-Softwaremodulen ausgeführten Schritte können bei verschiedenen Ausführungsformen des Laborsystems leicht variieren und das Laborsystem kann weitere Komponenten beinhalten, z.B. ein externes Textkorrektursystem und/oder einen NLP Prozessor zur Transformation des korrigierten natürlichsprachlichen Texts in strukturierten Text. In manchen Ausführungsformen beinhaltet allerdings die Laboranlage selbst einen solchen NLP Prozessor, der diese Transformation vornimmt, sodass der korrigierte natürlichsprachliche Text direkt in die Steuersoftware der Laboranlage eingegeben werden kann.

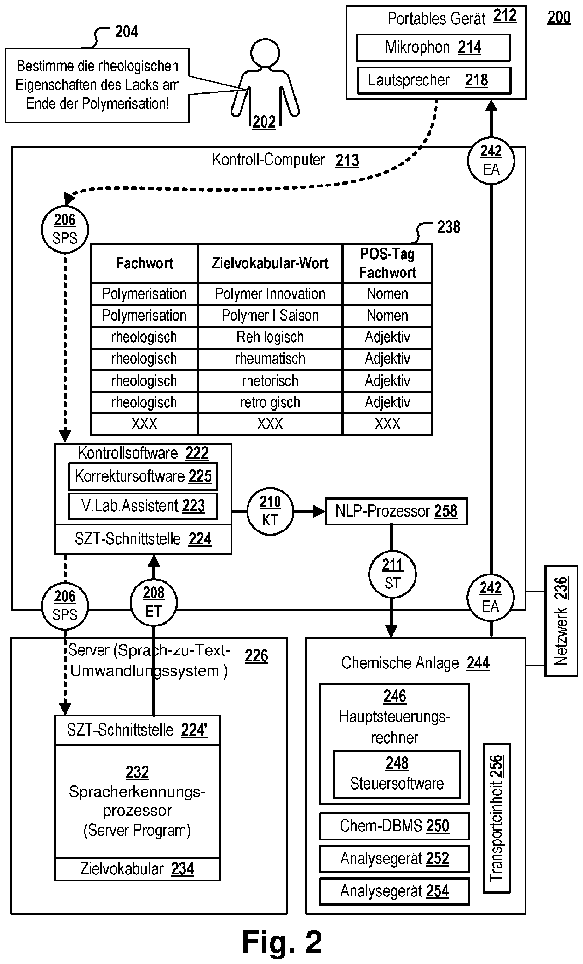

**Figur 2** zeigt ein Blockdiagramm eines verteilten Systems 200 zur sprachbasierten Steuerung von Laborgeräten 252, 254 und Labor-Softwaremodulen 248, 250. Das System 200 umfasst Laborgeräte 252, 254 und Labor-Softwaremodulen 248, 250, einen Kontrollcomputer 213 mit Kontrollsoftware sowie ein portables Gerät 212 mit Mikrophon. Optional kann das System weitere im Wesentlichen bau- und funktionsgleiche portable Geräte 212 beinhalten. Optional kann das System auch einen Hauptsteuerungsrechner mit Steuersoftware zur Steuerung der Laborgeräte beinhalten. Optional kann das System 200 auch die Korrektursoftware 225, die als Funktion der Kontrollsoftware oder als eigenständige lokal oder remote installierte Softwareapplikation implementiert sein kann, beinhalten. Optional kann das System 200 auch den NLP-Prozessor 258 beinhalten. Optional kann das System 200 auch das Sprache-zu-Text-Umwandlungssystem 226 beinhalten.

Die in dem System 200 enthaltenen Laborgeräte und Labor-Softwaremodule werden von einen Nutzer 202, z.B. einen Laborarbeiter, der sich in räumlicher Nähe zu einem portablen Gerät 212 mit Mikrophon 214 befindet, per Spracheingabe 204 gesteuert. Beispielsweise kann der Nutzer den Befehl "Synthetisiere den Lack namens <LACKNAME> und bestimme die rheologischen Eigenschaften des Lacks nach der Synthese!" in das Mikrophon eingeben. Das vom Mikrophon für die Spracheingabe aufgezeichnete Sprachsignal 206 wird vom portablen Gerät 212 über ein Netzwerk 236, z.B. das Internet oder ein Intranet, an die Kontrollsoftware 222 weitergeleitet, die auf einem Kotroll-Computer 213 installiert ist. Diese leitet das Sprachsignal 206 über das Netzwerk an ein allgemeinsprachliches Sprach-zu-Text Umwandlungssystem 226 weiter, welches das empfangene Sprachsignal 206 in einen Text 208 umwandelt, dessen Wörter und Ausdrücke ausschließlich einem allgemeinsprachlichen Zielvokabular 234 entnommen sind, das die fachsprachlichen Wörter wie etwa die Bezeichnung des Lacks oder das Wort "rheologisch" nicht beinhaltet. Beispielsweise kann das das Sprach-zu-Text Umwandlungssystem 226 als Cloudcomputersystem ausgebildet sein, das die Umwandlung in Form eines softwarebasierten Dienstes, hier als "Spracherkennungsprozessor" 232 bezeichnet, an mehrere Clients zur Verfügung stellt. Bei dem Sprach-zu-Text Umwandlungssystem 226 kann es sich z.B. um Cloudcomputersystem von Google handeln, das Googles Speech-to-Text Cloud-Dienst über das Internet bereitstellt. Bei der Schnittstelle 224 handelt es sich in diesem Fall also um eine cloudbasierte API von Google. Das Sprach-zu-Text-Umwandlungssystemen gibt den erkannten Text 208 an die Kontrollsoftware 222 zurück.

Gemäß der in Figur 2 dargestellten Ausführungsform beinhaltet die Kontrollsoftware eine Korrekturfunktion 225. Diese hat Zugriff auf eine Zuordnungstabelle 238, in welcher eine Vielzahl von Fachwörtern und Fachausdrücken jeweils ein oder mehrere Wörter oder Ausdrücke des Zielvokabulars zugeordnet sind.

In der Zuordnungstabelle 238 sind Wörter in Textform einander zugeordnet. Genauer gesagt ordnet die Zuordnungstabelle jedem von einer Vielzahl von fachsprachlichen Wörtern oder fachsprachlichen Ausdrücken zumindest ein Wort aus dem Zielvokabular zu. Das einem fachsprachlichen Wort (oder fachsprachlichen Ausdruck) zugeordnete zumindest eine Wort des Zielvokabulars ist ein Wort oder ein Ausdruck, welches das Sprach-zu-Text-Umwandlungssystem fälschlicherweise erkennt (und früher bei der Erstellung der Tabelle bereits fälschlicherweise erkannt hat), wenn dieses fachsprachliche Wort in Form eines Audiosignals in das Sprache-zu-Text-Umwandlungssystem eingegeben wird.

Optional können den Fachausdrücken auch POS Tags zugeordnet sein, welche optional im Zuge der Textkorrektur von der Korrekturfunktion 225 ausgewertet und berücksichtigt werden. Die Korrekturfunktion 225 kann auch als separate Korrektur-Softwareapplikationen 225 ausgebildet sein, die auf dem Kontrollcomputer 213 installiert ist und mit der die Kontrollsoftware 222 interoperabel ist.

Die Kontrollsoftware 222 übergibt den empfangenen Text 208 an die Korrekturfunktion bzw. Korrektursoftware 225 und veranlasst diese, den Text 208 unter Verwendung der Zuordnungstabelle 238 zu korrigieren. Im Zuge der Korrektur werden gemäß der Tabelle falsch erkannte Wörter und Ausdrücke der Zielsprache durch jeweils zugeordnete fachsprachliche Wörter und Ausdrücke ersetzt. Es entsteht ein korrigierter Text 210, der von der Kontrollsoftware 222 entweder direkt an ein bestimmtes Zielsystem, zum Beispiel eine chemische Anlage 244 übermittelt wird, oder welche vorab zunächst an einen NLP-Prozessor 258 weitergeleitet wird.

Der in Figur 2 dargestellte NLP-Prozessor ist auf dem Kontrollcomputer 213 installiert. Gemäß alternativer Ausführungsformen, wie zum Beispiel in Figur drei dargestellt, kann der NLP-Prozessor jedoch auch als ein Dienst über Netzwerk zur Verfügung gestellt werden. Der NLP-Prozessor analysiert die syntaktische Struktur des korrigierten Textes 210, um den semantischen Gehalt des korrigierten Textes zu erfassen und relevante Informationen aus diesem zu extrahieren und in einen strukturierten Text 211 überführen. Der Schritt der Überführung des korrigierten Textes 210 in einen korrigierten strukturierten Text 211 kann vorteilhaft sein, da viele Laborsysteme und Labor-Softwaremodule, die heute am Markt verfügbar sind, natürlichsprachigen Text noch nicht korrekt interpretieren können. Viele Zielsysteme verfügen jedoch über eine Eingabeschnittstelle für strukturierten Text, also zum Beispiel für Tabellen oder XML Dateien einer bestimmten vorgegebenen Struktur. In anderen Ausführungsformen enthält das Zielsystem einen eigenen NLP-Prozessor, sodass der korrigierte Text 210 natürlichsprachiger Form in das Zielsystem eingegeben werden kann. In diesem Fall sendet die Kontrollsoftware den korrigierten Text 210 direkt an das Zielsystem.

Bei dem Zielsystem kann es sich zum Beispiel um ein einzelnes Laborgerät handeln oder um eine Laboranlage, die mehrere Laborgeräte enthält. Bei der in Figur zwei dargestellten Laboranlage 244 kann es sich um eine Hochdurchsatz-Anlage (High Throughput Environment/HTE-Anlage) handeln, die eine Vielzahl von Laborgeräten 252, 254 und ein oder mehrere Labor-Softwaremodule 250, 248 beinhaltet.

Beispielsweise kann es sich bei den Laborgeräten 252, 254 um Analysegeräte handeln, die dazu konfiguriert sind, verschiedene chemische Analysen (zum Beispiel Viskosität, pH-Wert, Farbe, Oberflächenstruktur, Schichtdicke) durchzuführen. Beispielsweise kann es sich bei dem Softwaremodul 250 um eine chemische Datenbank handeln, die den eingegebenen Text 211 oder 210 als Suchanfrage interpretiert und eine entsprechende Suche innerhalb der chemischen Substanzdatenbank durchführt. Bei dem Labor-Softwaremodul 248 handelt es sich um eine Steuerungssoftware, die auf einem Hauptsteuerungsrechner 246 der chemischen Anlage 244 installiert ist, und welche dazu konfiguriert ist, die von den einzelnen Laborgeräten der Anlage durchzuführenden Arbeitsschritte zu koordinieren. Beispielsweise steuert die Steuersoftware 248 nicht nur die von den Analysegeräten durchgeführten Analysen Schritte, sondern auch die Arbeit einer Transporteinheit 256, die Substanzen und Zwischenprodukte innerhalb der chemischen Anlage 244 von einer Verarbeitungsstation zur nächsten transportiert.

Die Steuerung chemischer Anlagen mittels einer Spracheingabe kann besonders vorteilhaft sein, da diese Anlagen mittlerweile in der Lage sind, anhand einer bestimmten Rezeptur weitgehend automatisch ein bestimmtes chemisches Produkt, zum Beispiel eine bestimmte Farbe oder einen bestimmten Lack, herzustellen. Es ist somit möglich, ein Rezept für die Herstellung eines bestimmten chemischen Stoffes oder Stoffgemisches per Spracheingabe einzugeben und dadurch die chemische Anlage 244 dazu zu veranlassen, den entsprechenden Stoff bzw. Stoffgemisch automatisch herzustellen. In ähnlicher Weise ist es möglich, entsprechende Analysen von Stoffen per Spracheingabe zu initialisieren bzw. deren Ausführung zu kontrollieren, gegebenenfalls zu unterbrechen, zu modifizieren oder zu stoppen.

Die interne Datenbank 250 kann nicht nur zur Speicherung chemischer Substanzen und Substanzmischungen und deren Eigenschaften, sondern auch zur Speicherung der entsprechenden Rezepturen verwendet werden. Die Datenbank 250 kann also zum Beispiel Rezepturen von Farben und Lacken sowie deren Ausgangsstoffen sowie deren jeweilige physikalische chemische, optische und sonstige Eigenschaften enthalten. Außerdem können in der Datenbank sonstige relevante Daten gespeichert sein, zum Beispiel Produktdatenblätter der Hersteller der Substanzen, Sicherheitsdatenblätter, Parameter zur Konfiguration einzelner Module der HTE Anlage für die Analyse oder Synthese bestimmter Substanzen oder Produkte und ähnliches. Die HTE-Anlage ist dazu ausgebildet, Analysen und Synthesen basierend auf Rezepturen und Anweisungen, die in Textform eingegeben werden, auszuführen.

In manchen Ausführungsformen besitzen ein oder mehrere Laborgeräte der chemischen Anlage eine eigene Schnittstelle, über welches sie einen natürlichsprachigen oder strukturierten korrigierten Text 210, 211 von der Kontrollsoftware direkt empfangen können. In manchen anderen Ausführungsformen können die Laborgeräte der chemischen Anlage den korrigierten Text 210, 211 nur indirekt über die Steuersoftware 248 von der Kontrollsoftware 222 empfangen.

Nach Ausführungsformen beinhaltet die Spracheingabe Schlüsselbegriffe, anhand welcher die Kontrollsoftware 222 die Anzahl und Identität der jeweils benötigten Zielsysteme ermittelt. Der korrigierte Text wird von der Kontrollsoftware sodann in natürlichsprachlicher oder strukturierter Form an jedes der identifizierten Zielsysteme gesendet. Beispielsweise kann ein Nutzer durch Eingabe eines Schlüsselbegriffes "ZIELSYSTEM" gefolgt von dem Namen des jeweiligen Zielsystems (Laborgerät oder Softwaremodul) bestimmen, an welches Zielgerät die Kontrollsoftware den korrigierten Text sendet. Zusätzlich oder alternativ dazu kann die Kontrollsoftware aber auch selbst nach Schlüsselbegriffen suchen und anhand dieser Begriffe autonom ein geeignetes Zielsystem ermitteln. Beispielsweise kann die Spracheingabe lediglich eine bestimmte Art der Synthese festlegen und die Kontrollsoftware entscheidet dynamisch, welches von einer Vielzahl für die Synthese verwendbare Laborgeräte für die angefragte Synthese verwendet wird. Die Entscheidung kann zum Beispiel anhand der aktuellen Auslastung erfolgen, sodass ein Laborgerät gewählt wird, dass derzeit nicht oder wenig ausgelastet ist.

Vorzugsweise werden die Ergebnisse 242 der Ausführung einer bestimmten Hardware-oder Softwarefunktion von dem Zielsystem an die Kontrollsoftware 222 zurückgegeben. Die Kontrollsoftware kann das Ergebnis der Ausführung der Funktion nun an den Nutzer 202 zurückgegeben. Hierfür sind verschiedene Kanäle möglich. Beispielsweise kann dem Nutzer eine E-Mail, eine SMS oder eine Nachricht sonstigen Formats zugesendet werden, in welchem die Ergebnisse der Ausführung der Funktion enthalten sind. Gemäß den Figur 2 dargestellten Ausführungsform werden die Ergebnisse 242 - zumindest auch - (oder ausschließlich) an das portable Gerät 212 zurückgegeben und über dessen Lautsprecher 218 ausgegeben. Dies ist besonders vorteilhaft, da dem Laborarbeiter 202 eine maximale Bewegungsfreiheit sowohl was die Eingabe von Steuerungsbefehlen, chemischen Rezepturen und Suchanfragen angeht als auch was den Empfang der Ergebnisse der Ausführung einer entsprechenden Hardware oder Softwarefunktion angeht. Beispielsweise kann sich der Nutzer in einem bestimmten Arbeitsbereich eines Laborraums befinden und parallel zu seiner manuellen Tätigkeit die Analyse eines bestimmten Stoffes per Sprachbefehl veranlassen. Das Ergebnis der Analyse wird im akustisch über den Lautsprecher mitgeteilt. Es ist also nicht erforderlich, dass der Nutzer seine aktuelle manuelle Tätigkeit unterbricht, um die Ergebnisse abzufragen. Vielmehr kann der Nutzer mit der Kontrollsoftware regelrecht in Dialog treten und beispielsweise nach Erhalt des Ergebnisses, dass eine bestimmte Synthese beendet ist, auch entsprechende Analyseschritte für den erzeugten Stoff per Spracheingabe initialisieren. Die Effizienz von Laborarbeiten kann somit drastisch erhöht werden, da der Nutzer hierdurch in die Lage versetzt wird, in verstärktem Maße parallel zu arbeiten und beispielsweise die Kontrolle komplexer Synthesen und Analysen parallel zu anderen Laborarbeiten zu veranlassen und zu kontrollieren.

Häufige Tätigkeiten innerhalb eines Labors, die gemäß Ausführungsformen der Erfindung per Spracheingabe gesteuert werden können, beziehen sich zum Beispiel auf folgende Tätigkeiten und hierfür beispielhaft angegebene Spracheingaben:
- Der Laborarbeiter hat am Vortag eine Analyse eines bestimmten Lackes im Hinblick auf dessen rheologische Eigenschaften gestartet und möchte nun das in der Datenbank der HTE Anlage hinterlegte Ergebnis abfragen. Mögliche Spracheingabe: "KONTROLLCOMPUTER, zeige mir die Ergebnisse der rheologischen Analyse vom 24. Februar 2019 *durch die HTE Anlage in Raum 22'*
- der Laborarbeiter möchte Kosten sparen und überlegt sich, ein bestimmtes Lösungsmittel «LMTEUER» durch ein kostengünstigeres «LMGÜNSTIG» zu ersetzen. Bei dem Namen «LMGÜNSTIG» handelt es sich um einen Handelsnamen des Herstellers. Der Laborarbeiter ist sich aber nicht sicher, ob das kostengünstigere Lösungsmittel für den Lack, welcher hergestellt werden soll, geeignet ist, und möchte das Produktdatenblatt einsehen, in welchem weitere Angaben zu den chemischen und physikalischen Eigenschaften des kostengünstigen Lösungsmittels spezifiziert sind. Mögliche Spracheingabe: "*KONTROLLCOMPUTER, zeige mir das Produktdatenblatt von* «LMGÜNSTIG» an" oder *"KONTROLLCOMPUTER, zeige mir das in der HTE-Datenbank von Raum 22 gespeicherte Produktdatenblatt von* «LMGÜNSTIG» an".
- Nach Sichtung des Produktdatenblattes des Lösungsmittels «LMGÜNSTIG» ist der Laborarbeiter der Auffassung, dass das Lösungsmittel voraussichtlich anstatt des teureren Lösungsmittels für die Herstellung des bestimmten Lackes verwendet werden kann. Es ist jedoch davon auszugehen, dass die Rezeptur etwas angepasst werden muss, da mehrere Parameter wie etwa pH-Wert, rheologische Eigenschaften, Polarität und andere von denen des teureren Lösungsmittels abweichen. Da diese Eigenschaften miteinander in Wechselwirkung stehen, ist es für den Laborarbeiter nicht möglich, die nötigen Anpassungen der Rezeptur aufgrund theoretischer Überlegungen zu erkennen. Die Durchführung von Testreihen ist arbeitsintensiv und kostet Zeit. Das Labor verfügt aber über eine Software, welche die Eigenschaften eines chemischen Produkts, zum Beispiel von Farben und Lacken, ausgehend von einer bestimmten Rezeptur vorhersagen (simulieren) kann. Die Simulation kann z.B. auf CNNs (convolutional neuronal networks) beruhen. Der Laborarbeiter möchte diese Simulationssoftware nutzen, um die voraussichtlichen Eigenschaften eines Lackes basierend auf einer bekannten Rezeptur, in welchem das teure Lösungsmittel durch das günstige ersetzt wurde, simuliert werden. Mögliche Spracheingabe: "*KONTROLLCOMPUTER, veranlasse die HTE-Simulationssoftware, die Eigenschaften eines Lackes zu berechnen mit folgender Rezeptur: 70.2 g naphtenisches Öl, 4 g methol n-amylketon, 1,5 g n-pentyl propionat, 1g Ultrasorb, 50 g* «LMGÜNSTIG», [...]".
- Die Simulation hat ergeben, dass das günstige Lösungsmittel nicht für die Herstellung des Lackes geeignet ist. Der Labormitarbeiter möchte nun im Internet nach anderen Lösungsmitteln suchen, welche das teure Lösungsmittel ersetzen können ohne die Qualität des Produkts zu beeinträchtigen, um Kosten zu reduzieren. Mögliche Spracheingabe: "*KONTROLLCOMPUTER, suche im Internet: «hoch viskosen Lösungsmitteln für die Lackherstellung»".*

Gemäß Ausführungsformen der Erfindung können all diese Eingaben und Befehle an die jeweiligen Ausführungssysteme erfolgen, ohne dass der Nutzer hierfür den Laborraum verlassen und/oder Handschuhe ausziehen muss.

Die oben beispielhaft angegebenen Spracheingaben beinhalten zumeist sowohl allgemeinsprachliche als auch fachsprachliche Wörter und Ausdrücke. So sind zum Beispiel die Wörter bzw. Ausdrücke "rheologische", *"naphtenisches Öl", "methol n-amyl keton" "n-pentyl propiona" chemische Fachbegriffe und* <<LMGÜNSTIG>>ein Handelsname eines chemischen Produkts. Diese Wörter bzw. Ausdrücke sind typischerweise nicht in dem von den gängigen allgemeinsprachlichen Sprache-zu-Text-Umwandlungssystem unterstützten Vokabular ("Zielvokabular") enthalten. Dank der nachträglichen Korrektur durch die Korrektursoftware wird sichergestellt, dass die Spracheingaben trotz der Verwendung eines allgemeinsprachlichen Sprach-zu-Text-Umwandlungssystems 226 korrekt in Text umgesetzt werden. Die Kontrollsoftware führt eine Vielzahl von Koordinations- und Kontrolltätigkeiten bezüglich der Verwaltung und Verarbeitung des Sprachsignals und des aus diesem generierten Texts aus, die je nach Systemarchitektur leicht unterschiedlich sind.

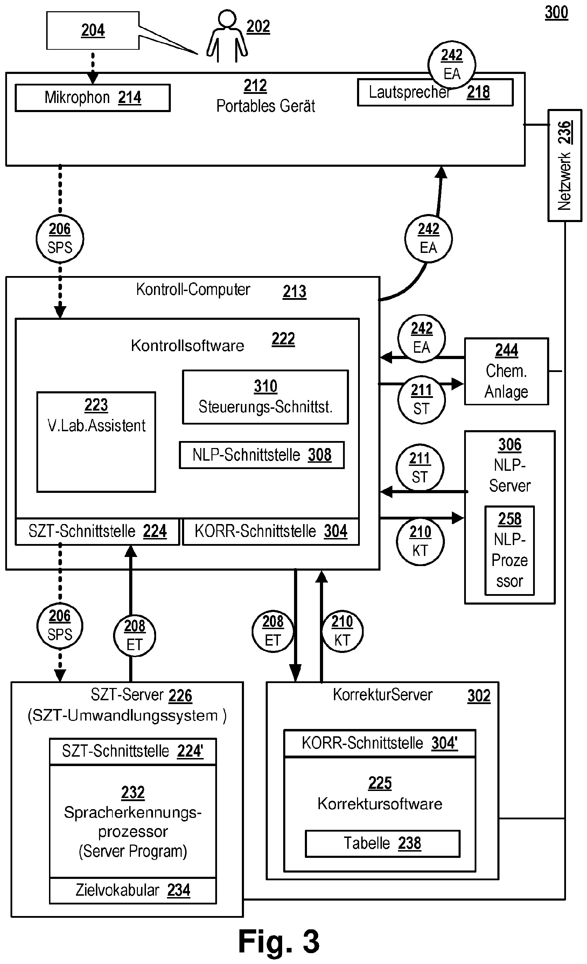

**Figur 3** zeigt ein Blockdiagramm eines alternativen verteilten Systems 300 zur sprachbasierten Steuerung von Laborgeräten und Labor-Softwaremodulen. Das System 300 kann im Wesentlichen die gleichen Komponenten und Funktionen beinhalten wie in Figur 2 dargestellt. Im Unterschied zu dem in Figur 2 dargestellten System ist die Korrektursoftware 255 kein Bestandteil der Kontrollsoftware und ist auch nicht als eigene Softwareapplikation auf dem Kontrollcomputer 213 lokal installiert, sondern wird als Cloudservice von einem Cloudcomputersystem 302 über das Internet bereitgestellt. Die Kontrollsoftware 222 ist dazu konfiguriert, über eine entsprechende Schnittstelle 304 den von dem Sprache-zu-Text Umwandlungssystem empfangenen Text 208 mittels der - nun auf dem Cloudcomputersystem 302 gespeicherten -Zuordnungstabelle zu korrigieren und den korrigierten Text 210 zu empfangen.

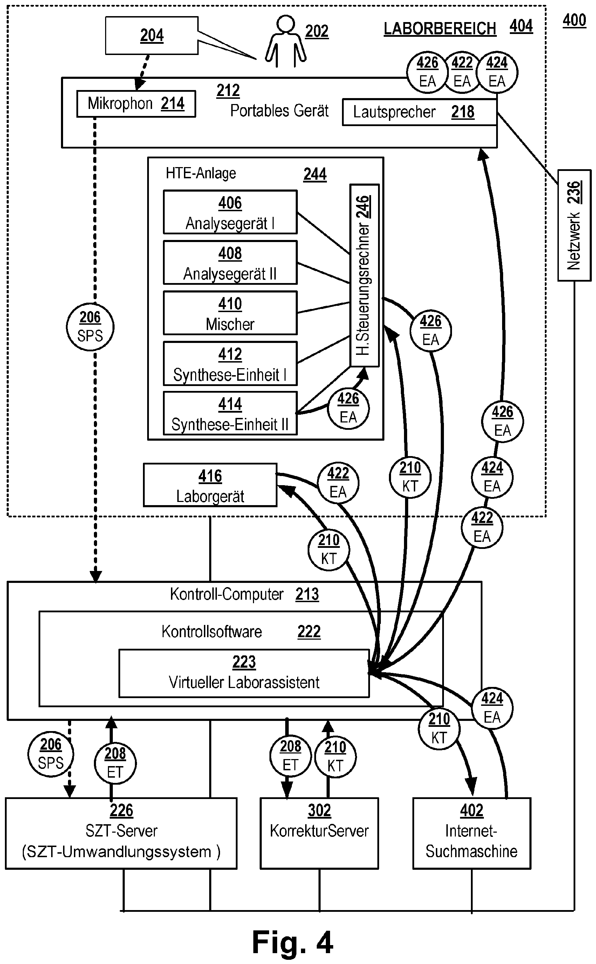

**Figur 4** zeigt ein Blockdiagramm eines alternativen verteilten Systems 400 zur sprachbasierten Steuerung von Laborgeräten und Labor-Softwaremodulen. Der Datenaustausch zur Steuerung der einzelnen Laborgeräte 406-414 der HTE-Anlage 244 ist in Figur 4 in stärkerer Detailtiefe illustriert.

Das Labor umfasst einen Laborbereich 404, in welchem verschiedene einzeln stehende Laborgeräte 416, z.B. eine Zentrifuge, sowie eine HTE-Anlage 418.

Die HTE Anlage beinhaltet eine Vielzahl von Modulen und Hardwareeinheiten 406-414, die von einer Steuersoftware auf einem Haupsteuerungsrechner 246 verwaltet und gesteuert werden. Die Steuersoftware dieser Ausführungsform dient als zentrale Schnittstelle zur Überwachung und Steuerung der in der HTE Anlage enthaltenen Geräte nach außen. Die Kontrollsoftware 222 auf dem Kontrollcomputer 213 hat Zugriff auf die Steuersoftware und ist dazu konfiguriert, den korrigierten Text 210, 211 in natürlichsprachlicher oder strukturierter Form als Eingabe an die Steuersoftware und optional auch an weitere Zielsysteme, z.B. das Laborgerät 416 und/oder eine Internetsuchmaschine 402 zu senden. Die Erzeugung eines korrigierten Texts 210, 211 aus einer Spracheingabe 204 eines Nutzers 202 erfolgt wie gemäß Ausführungsformen der Erfindung bereits beschrieben.

Die Kontrollsoftware 222 kann als "virtueller Laborassistent" 223 implementiert sein. Der virtuelle Laborassistent kann beispielsweise auf einen Namen wie "KONTROLLCOMPUTER", "LUISA" oder "EVA" hören. Die Kontrollsoftware ist dazu konfiguriert, den korrigierten Text 210 nach Schlüsselwörtern zu durchsuchen und in Abhängigkeit dieser Schlüsselwörter bestimmte Hardware- oder Softwarefunktionen eines Zielsystems aufzurufen. Beispielsweise sucht die Kontrollsoftware in dem Text 210 nach einem Schlüsselwort wie z.B. "KONTROLLCOMPUTER" oder "EVA". Falls der korrigierte Text dieses Schlüsselwort enthält, wird der virtuelle Laborassistent 223 dazu veranlasst, den korrigierten Text weiter daraufhin zu analysieren, ob der korrigierte Text Befehle zur Durchführung einer Hard- oder Softwarefunktion beinhaltet und, falls ja, von welcher Hardware oder Software unter der Kontrolle der Kontrollsoftware bzw. des Laborassistenten diese Befehle ausgeführt werden sollen. Beispielsweise kann der korrigierte Text Namen von Geräten oder Laborräumen enthalten, welche spezifizieren, an welches Gerät und welche Software der Befehl weitergeleitet werden soll.

Das Wort "KONTROLLCOMPUTER" bzw. sonstige Namen des virtuellen Assistenten in der Spracheingabe können also in analoger Weise wie die Namen "Siri" und "Alexa" der bekannten virtuellen Assistenzen für "Alltagsprobleme" im Bereich chemischer Labors verwendet werden, um eine effizientere und sichere Steuerung von Hardware- und Softwarefunktionen zu ermöglichen.

In einem möglichen Implementierungsbeispiel ergibt die Auswertung des korrigierten Textes 210 durch den virtuellen Laborassistenten, dass eine InternetSuchmaschine 402 nach einer bestimmten Substanz, die in dem korrigierten Text 210 als fachsprachliches Wort oder Ausdruck spezifiziert ist, suchen soll. Der korrigierte Text bzw. bestimmte Teile von diesem werden vom virtuellen Assistenten über das Internet in die Suchmaschine eingegeben. Die Ergebnisse 424 der Internetrecherche werden an die Kontrollsoftware bzw. den Assistenten zurückgegeben, der diese an ein geeignetes Ausgabegerät in der Nähe des Nutzers 202, zum Beispiel das portable Gerät 212 mit dem Mikrophon und einem Lautsprecher 214, weiterleitet. Vorzugsweise erfolgt die Weiterleitung so, dass der virtuelle Laborassistent, also die Kontrollsoftware, die Ergebnisse 424 mit einer natürlich klingenden Stimme über den Lautsprecher 214 dem Nutzer vorliest.

In einem weiteren möglichen Implementierungsbeispiel ergibt die Auswertung des korrigierten Textes 210 durch den virtuellen Laborassistenten, dass das alleinstehende Laborgerät 416, eine Zentrifuge, einen bestimmten Stoff bei einer bestimmten Drehzahl pelletieren soll. Der Name der Zentrifuge und der Stoff sind in dem korrigierten Text 210 als fachsprachliches Wort oder Ausdruck spezifiziert, was ausreichend ist, da die Zentrifuge die zu verwendenden Zentrifugationsparameter wie Dauer und Umdrehungszahl selbsttätig aus einer internen Datenbank basierend auf dem Substanznahmen ausliest. Der korrigierte Text bzw. bestimmte Teile von diesem werden vom virtuellen Assistenten über das Internet an die Zentrifuge 416 gesendet. Die Zentrifuge startet ein zu der Substanz gehörendes Zentrifugationsprogramm und gibt eine Meldung über die erfolgreiche oder nicht erfolgreiche Zentrifugation als Textmeldung 422 zurück. Das Ergebnis 422 wird an den Assistenten 223 zurückgegeben, der diese wie für die Ergebnisse 424 beschrieben über den Lautsprecher 214 und optional auch über weitere Ausgabeschnittstellen, z.B. einen Bildschirm, ausgibt.

In einem weiteren möglichen Implementierungsbeispiel ergibt die Auswertung des korrigierten Textes 210 durch den virtuellen Laborassistenten, dass die HTE-Anlage 244 einen bestimmten Lack synthetisieren soll. Die Komponenten des Lacks sind in dem korrigierten Text ebenfalls spezifiziert und bestehen aus einer Mischung von Handelsnamen chemischer Produkte und IUPAC Substanznahmen. Die HTE-Anlage empfängt den korrigierten Text 210 und entscheidet autonom, die Synthese in der Syntheseeinheit 414 durchzuführen. Eine Nachricht über die erfolgreiche Synthese oder eine Fehlermeldung wird als Ergebnis 426 von der Syntheseeinheit 414 an die Steuersoftware der HTE-Anlage zurückgegeben und die Steuersoftware wiederum gibt das Ergebnis 426 an die Kontrollsoftware bzw. den virtuellen Laborassistenten zurück, der es an ein geeignetes Ausgabegerät, zum Beispiel Endgerät 312, weiterleitet, das diese Ergebnisse 426 wie für die Ergebnisse 424 beschrieben über den Lautsprecher 214 und optional auch über weitere Ausgabeschnittstellen, z.B. einen Bildschirm, ausgibt.

Bei der Software und/oder der Hardware, an welche der korrigierte Text 210, 211 ausgegeben wird, handelt es sich vorzugsweise um Software und Hardware, die innerhalb eines Labors 404. Es ist aber möglich, dass der Text oder Teile von diesem zusätzlich auch an Zielsysteme außerhalb des Labors gesendet werden, deren Ergebnisse zur Verwendung für eine chemische Analyse oder Synthese konzipiert oder geeignet sind.

Die Sprachsteuerung von Laborgeräten und mit diesen assoziierten Labor-Softwaremodulen kann genutzt werden, um Ergebnisse von bereits im Labor durchgeführten Analysen und Synthesen, Laborprotokolle und Produktdatenblätter in entsprechenden Datenbanken des Labors zu recherchieren und auszugeben und ergänzende Suchen auch im Internet und über das Internet zugänglichen öffentlichen oder proprietären Datenbanken sprachgesteuert durchzuführen. Auch Sprachbefehle, welche spezielle Handelsnahmen von Chemikalien oder Laborgeräten bzw. Laborverbrauchsmaterialien und/oder Namen und Adjektive der chemischen Fachsprache beinhalten, werden richtig in Text umgesetzt und können somit vom Zielsystem richtig interpretiert werden. Gemäß Ausführungsformen der Erfindung wird somit ein weitgehend sprachgesteuerter, hoch integrierter Betrieb eines chemischen oder biologischen Labors bzw. einer Labor-HTE-Anlage ermöglicht.

Die Hardware (Smart Speaker) bekannter Sprache-zu-Text-Clouddienst- Anbieter verfolgen das Ziel, die durch den Cloud Anbieter selbst entwickelten Services direkt anzusteuern und zu nutzen. Die Anwendung im Bereich Fachvokabular ist derzeit nicht oder in nur sehr geringem Umfang erschlossen. Alle der hier gezeigten Systemarchitekturen 200, 300, 400 ermöglichen die Verwendung bestehender Sprach-zu-Text-APIs diverser Cloud-Anbieter mittels einer eigenen, Cloud-Anbieterunabhängige Hardware um eine fachspezifische Spracherkennung und eine darauf basierende Steuerung von Laborgeräten und elektronischen Suchdiensten in einem Labor zu ermöglichen.

Im Kontext der chemischen Synthese von Farben und Lacken ist die effiziente Einholung von Informationen zu chemischen Substanzen und eine sprachbasierte Steuerung von Laborgeräten und HTE Anlagen besonders vorteilhaft, da eine große Vielzahl von Ausgangsstoffen für die Herstellung von Farben und Lacken notwendig ist, wobei deren Eigenschaften auf komplexe Art und Weise miteinander wechselwirken und die Eigenschaften des Produkts stark beeinflussen. Es fallen somit im Kontext der Herstellung von Farben und Lacken eine Vielzahl von Analysen, Kontrollschritten und Testreihen an. Farben und Lacke sind hochkomplexe Mischungen von bis zu 20 Rohstoffen und mehr, zum Beispiel Lösungsmittel, Harze, Härter, Pigmente, Füllstoffe und zahlreiche Additive (Dispergierungsmittel, Benetzer, Haftvermittler, Entschäumer, Biozide, Flammschutzmittel, und weitere). Eine effiziente Beschaffung von Informationen zu den einzelnen Komponenten und zur Ansteuerung entsprechender Analyse- und Syntheseanlagen kann den Herstellungsprozess und die Qualitätssicherung der Produkte erheblich beschleunigen.

### Liste der Referenznummern

- 102-106: Schritte
- 200: verteiltes System
- 202: Nutzer
- 204: Spracheingabe
- 206: Sprachsignal
- 208: erkannter Text
- 210: korrigierter Text (natürlichsprachig)
- 211: korrigierter Text (strukturierter Text)
- 212: portables Gerät
- 213: Kontroll-Computer
- 214: Mikrofon
- 218: Lautsprecher
- 222: Kontrollsoftware
- 223: virtueller Laborassistent
- 224: Sprach-zu-Text Schnittstelle (clientseitig)
- 224': Sprach-zu-Text Schnittstelle (serverseitig)
- 225: Korrektursoftware
- 226: Sprach-zu-Text Umwandlungssystem/Cloud-System
- 232: Spracherkennungsprozessor
- 234: Zielvokabular
- 236: Netzwerk
- 238: Zuordnungstabelle
- 242: Ergebnis der Ausführung des korrigierten Textes
- 246: Hauptsteuerungsrechner
- 248: Steuerungssoftware
- 250: chemische Datenbank (DBMS)
- 252: Analysegerät
- 254: Analysegerät
- 256: Transporteinheit
- 300: verteiltes System
- 302: Server mit Textkorrekturdienst
- 304: Korrekturdienstschnittstelle (clientseitig)
- 304': Korrekturdienstschnittstelle (serverseitig)
- 308: NLP-Schnittstelle
- 310: Steuerungsschnittstelle Laboranlage
- 400: verteiltes System
- 402: Internetsuchmaschine
- 404: Laborbereich/Laborraum
- 406: Analysegerät
- 408: Analysegerät
- 410: Mischer
- 412: Syntheseeinheit
- 414: Syntheseeinheit
- 414: Kontrollcomputer
- 416: Standalone- Laborgerät
- 422: Ergebnis der Ausführung des korrigierten Textes (Textform)
- 424: Ergebnis der Ausführung des korrigierten Textes (Textform)
- 426: Ergebnis der Ausführung des korrigierten Textes (Textform)

## Patentansprüche

1. Laborsystem, beinhaltend:
- zumindest ein Laborgerät (252, 254, 406, 408, 412, 414, 416), das zur Analyse und/oder Synthese einer chemischen Substanz ausgebildet ist,
- zumindest ein Labor-Softwaremodul (248), das zur Verarbeitung von Daten, die von dem zumindest einen Laborgerät gewonnen wurden, ausgebildet ist;
- ein Datenverarbeitungsgerät (213) mit einer Kontrollsoftware (222), die eine Schnittstelle zur Bedienung des zumindest einen Laborgeräts und/oder des zumindest einen Labor-Softwaremoduls bereitstellt; und
- ein portables Gerät (212) mit Mikrophon (214), wobei das Gerät über ein Netzwerk (236) mit der Kontrollsoftware interoperabel verbunden ist, wobei das Gerät dazu ausgebildet ist, in Interoperation mit der Kontrollsoftware einem Nutzer (202) eine eingriffsfreie Bedienung des zumindest einen Laborgeräts und/oder des zumindest einen Labor-Softwaremoduls durch Spracheingabe (204) in das Mikrophon zu ermöglichen;
**dadurch gekennzeichnet, dass** die Kontrollsoftware konfiguriert ist zu:
- Empfang eines Sprachsignals (206), das das Mikrofon auf Basis der Spracheingabe aufgenommen hat, von dem portablen Gerät, wobei das Sprachsignal von dem Nutzer gesprochene allgemeinsprachliche und fachsprachliche Wörter beinhaltet;
- Eingabe des empfangenen Sprachsignals in ein Sprach-zu-Text-Umwandlungssystem, wobei das Sprach-zu-Text-Umwandlungssystem lediglich die Umwandlung von Sprachsignalen in ein Zielvokabular (234), welches die fachsprachlichen Wörter nicht beinhaltet, unterstützt;
- Empfang eines Textes (208), welcher von dem Sprach-zu-Text-Umwandlungssystem aus dem Sprachsignal erzeugt wurde, von dem Sprach-zu-Text-Umwandlungssystem;
- Erzeugen eines korrigierten Textes (210) aus dem empfangenen Text, wobei der korrigierte Text durch die Kontrollsoftware alleine oder durch die Kontrollsoftware in Interpretation mit einer Textkorrektursoftware, mit der die Kontrollsoftware operativ verbunden ist, erzeugt wird, wobei der korrigierte Text durch automatisches Ersetzen von Wörtern und Ausdrücken des Zielvokabulars in dem empfangenen Text durch fachsprachliche Wörter gemäß einer Zuordnungstabelle (238) von Wörtern in Textform erzeugt wird, wobei die Zuordnungstabelle jedem von einer Vielzahl von fachsprachlichen Wörtern zumindest ein Wort aus dem Zielvokabular zuordnet, wobei das einem fachsprachlichen Wort zugeordnete zumindest eine Wort des Zielvokabulars ein Wort oder ein Ausdruck ist, welches das Sprach-zu-Text-Umwandlungssystem fälschlicherweise erkennt, wenn dieses fachsprachliche Wort in Form eines Sprachsignals eingegeben wird; und
- Verwenden des korrigierten Textes um das zumindest eine Laborgerät und/oder das zumindest eine Labor-Softwaremodul dazu zu veranlassen, die Analyse, Synthese und/oder die Softwarefunktion gemäß Angaben in dem korrigierten Text auszuführen.

2. Das Laborsystem nach Anspruch 1, wobei die Kontrollsoftware als virtueller Laborassistent für den Betrieb des zumindest einen Laborgeräts und des zumindest einen Labor-Softwaremoduls ausgebildet ist.

3. Das Laborsystem nach einem der vorigen Ansprüche, wobei das portable Gerät dazu konfiguriert ist zu:
- Empfang eines Sprachsignals (206) des Nutzers über das Mikrophon;
- Weiterleiten des empfangenen Sprachsignals an die Kontrollsoftware zur Umwandlung des Sprachsignals in einen Text (208) durch die Kontrollsoftware oder durch ein mit dieser operativ verbundenen Sprach-zu-Text-Umwandlungssystem (226).

4. Das Laborsystem nach Anspruch 3, wobei das portable Gerät ferner einen Lautsprecher (218) umfasst, wobei das portable Gerät dazu konfiguriert ist zu:
- In Antwort auf das Senden des Sprachsignals, Empfang eines Ergebnisses (242) einer Ausführung einer Funktion von der Kontrollsoftware, wobei die Funktion gemäß dem Text durch das zumindest eine Laborgerät und/oder durch das zumindest eine Labor-Softwaremodul durchgeführt wurde; und
- Ausgabe des Ergebnisses über den Lautsprecher an den Nutzer.

5. Das Laborsystem nach einem der vorigen Ansprüche, wobei das portable Gerät sich innerhalb des gleichen Raums (404) wie das zumindest eine Laborgerät und/oder im gleichen Raum wie ein Hauptsteuerungsrechner (246) einer Laboranlage, die das zumindest eine Laborgerät beinhaltet, befindet.

6. Das Laborsystem nach einem der vorigen Ansprüche, wobei das portable Gerät ein Einplatinenrechner, insbesondere ein Raspberry Pi ist.

7. Das Laborsystem nach einem der vorigen Ansprüche, wobei es sich bei den fachsprachlichen Wörtern um Wörter aus einer der folgenden Kategorien handelt:
- Namen von chemischen Substanzen, insbesondere von Farben und Lacken;
- Physikalische, chemische, mechanische, optische oder haptische Eigenschaften chemischer Substanzen;
- Namen von Laborgeräten und Geräten der chemischen Industrie;
- Namen von Labor-Verbrauchsmaterial und Labor-Bedarf;
- Handelsnamen im Farb- und Lackbereich.

8. Das Laborsystem nach einem der vorigen Ansprüche, wobei die in der Zuordnungstabelle gespeicherten Wörter und Ausdrücke der Zielsprache fehlerhafte Textausgaben des Sprache-zu-Text-Umwandlungssystems darstellen, welche erzeugt wurden auf Basis von Spracheingaben von Fachworten durch eine Vielzahl unterschiedlicher Personen.

9. Das Laborsystem nach einem der vorigen Ansprüche, wobei das zumindest eine Laborgerät eine Vielzahl von Laborgeräten ist, wobei die Laborgeräte jeweils ausgewählt sind aus einer Gruppe umfassend:
- eine Analysestation (406, 408) die dazu ausgebildet ist, chemischen Substanzen oder Substanzmischungen zu analysieren; und/oder
- eine Synthesestation (412, 414) die dazu ausgebildet ist, eine Synthese von chemischen Substanzen oder Substanzmischungen durchzuführen; und/oder
- eine Vor- oder Nachbearbeitungsstation (410), die dazu ausgebildet ist, eine chemische Substanz vor oder nach einem Analyse- oder Syntheseschritt so zu modifizieren, dass ein nachfolgender Arbeits- oder Transportschritt möglich ist.

10. Das Laborsystem nach einem der vorigen Ansprüche, wobei das das zumindest eine Laborgerät eine Vielzahl von Laborgeräten ist, welche jeweils als Bearbeitungsstationen einer chemischen Substanz dienen, ferner umfassend:
- Eine Transporteinheit (256), die dazu ausgebildet ist, die für eine Synthese oder Analyse verwendeten Substanzen zu den Bearbeitungsstationen zu transportieren, um den Bearbeitungsstationen jeweils zu ermöglichen, die Substanzen zumindest einem Bearbeitungsschritt zu unterziehen;
- Einen Hauptsteuerungsrechner einer Laboranlage (244), die die Vielzahl von Laborgeräten beinhaltet, wobei der Hauptsteuerungsrechner eine Steuersoftware beinhaltet, die dazu konfiguriert ist, die Bearbeitungsschritte und den Transport der chemischen Subtanzen basierend auf Instruktionen in Form eines strukturierten Textes zu orchestrieren.

11. Das Laborsystem nach einem der vorigen Ansprüche, wobei die Kontrollsoftware einen NLP-Prozessor (258) umfasst oder mit einem NLP-Prozessor interoperabel ist und wobei die Kontrollsoftware konfiguriert ist zum:
- Verwenden des NLP-Prozessors um den korrigierten Text in einen strukturierten Text (211) zu transformieren, welcher von einem Zielsystem interpretiert werden kann, wobei das Zielsystem das zumindest eine Labor-Softwaremodul, das zumindest eine Laborgerät und/oder eine Steuersoftware eines Hauptsteuerungsrechners einer Laboranlage, die das zumindest eine Laborgerät umfasst, ist; und
- Eingabe des strukturierten Textes in das Zielsystem, um diese dazu zu veranlassen, eine laborbezogene Software- und/oder Hardwarefunktion auszuführen.

12. Das Laborsystem nach einem der vorigen Ansprüche, wobei die eingriffsfreie Bedienung eine Umwandlung der Spracheingabe in einen Text (210, 211) umfasst,
- wobei das zumindest einen Labor-Softwaremodul eine chemische Substanzdatenbank ist, die dazu ausgebildet ist, den eingegebenen Text als Sucheingabe zu interpretieren und Informationen zu der Sucheingabe in der Datenbank zu ermitteln und an die Kontrollsoftware als Ergebnis zurückzugeben; und/oder
- wobei das zumindest einen Labor-Softwaremodul eine Simulationssoftware ist, die dazu ausgebildet ist, Eigenschaften von chemischen Erzeugnissen, insbesondere von Lacken und Farben, basierend auf einer vorgegebenen Substanzmischungsspezifikation zu simulieren, wobei die Simulationssoftware dazu ausgebildet ist, den eingegebenen Text als Spezifikation des Erzeugnisses, dessen Eigenschaften simuliert werden soll, zu interpretieren;
- wobei das zumindest einen Labor-Softwaremodul eine Steuersoftware (248) eines Hauptsteuerungsrechners einer Laboranlage (244) ist, die das zumindest eine Laborgerät beinhaltet, wobei die Steuersoftware dazu ausgebildet ist, das zumindest eine Laborgerät und eine Transporteinheit dazu zu veranlassen, eine Vielzahl von Bearbeitungsschritten und den Transport der chemischen Subtanzen zwischen den Laborgeräten entsprechend den in dem eingegebenen Text enthaltenen Angaben durchzuführen.

13. Das Laborsystem nach einem der vorigen Ansprüche, wobei die Kontrollsoftware ein Register mit Accounts einer Vielzahl von bei der Kontrollsoftware registrierten Nutzern beinhaltet, wobei die Kontrollsoftware eine Stimmerkennungsfunktion zur Erkennung jedes der registrierten Nutzer anhand dessen Stimme umfasst, wobei die Kontrollsoftware dazu ausgebildet ist, dem Nutzer die eingriffsfreie Bedienung nur desjenigen Laborgeräts und/oder desjenigen Labor-Softwaremoduls durch Spracheingabe in das Mikrophon zu ermöglichen, zu deren Bedienung dieser Nutzer berechtigt ist.

14. Ein Verfahren zur Steuerung eines Laborgeräts und/oder eines Labor-Softwaremoduls, umfassend:
- Bereitstellung zumindest eines Laborgeräts (252, 254, 406, 408, 412, 414, 416) und zumindest eines Labor-Softwaremoduls (248), wobei das zumindest eine Laborgerät zur Analyse und/oder Synthese einer chemischen Substanz ausgebildet ist, wobei das zumindest eine Labor-Labor-Softwaremodul ein Labor-Softwaremodul zur Verarbeitung von Daten, die von dem zumindest einen Laborgerät (252, 254, 406, 408, 412, 414, 416) gewonnen wurden, ist;
- Bereitstellung eines Datenverarbeitungsgeräts (213) mit einer Kontrollsoftware (222), wobei die Kontrollsoftware einem Nutzer eine Schnittstelle zur Bedienung des zumindest einen Laborgeräts und/oder des zumindest einen Labor-Softwaremoduls bereitstellt; und
- Bereitstellung eines portablen Geräts (212) mit Mikrophon (214), wobei das Gerät über ein Netzwerk (236) mit der Kontrollsoftware interoperabel verbunden ist, wobei das Gerät dazu ausgebildet ist, in Interoperation mit der Kontrollsoftware dem Nutzer eine eingriffsfreie Bedienung des zumindest einen Laborgeräts und/oder des zumindest einen Labor-Labor-Softwaremoduls durch Spracheingabe in das Mikrophon zu ermöglichen;
**dadurch gekennzeichnet, dass** die Kontrollsoftware durchführt:
- Empfang eines Sprachsignals (206), das das Mikrofon auf Basis der Spracheingabe aufgenommen hat, von dem portablen Gerät, wobei das Sprachsignal von dem Nutzer gesprochene allgemeinsprachliche und fachsprachliche Wörter beinhaltet;
- Eingabe des empfangenen Sprachsignals in ein Sprach-zu-Text-Umwandlungssystem, wobei das Sprach-zu-Text-Umwandlungssystem lediglich die Umwandlung von Sprachsignalen in ein Zielvokabular (234), welches die fachsprachlichen Wörter nicht beinhaltet, unterstützt;
- Empfang eines Textes (208), welcher von dem Sprach-zu-Text-Umwandlungssystem aus dem Sprachsignal erzeugt wurde, von dem Sprach-zu-Text-Umwandlungssystem;
- Erzeugen eines korrigierten Textes (210) aus dem empfangenen Text, wobei der korrigierte Text durch die Kontrollsoftware alleine oder durch die Kontrollsoftware in Interpretation mit einer Textkorrektursoftware, mit der die Kontrollsoftware operativ verbunden ist, erzeugt wird, wobei der korrigierte Text durch automatisches Ersetzen von Wörtern und Ausdrücken des Zielvokabulars in dem empfangenen Text durch fachsprachliche Wörter gemäß einer Zuordnungstabelle (238) von Wörtern in Textform erzeugt wird, wobei die Zuordnungstabelle jedem von einer Vielzahl von fachsprachlichen Wörtern zumindest ein Wort aus dem Zielvokabular zuordnet, wobei das einem fachsprachlichen Wort zugeordnete zumindest eine Wort des Zielvokabulars ein Wort oder ein Ausdruck ist, welches das Sprach-zu-Text-Umwandlungssystem fälschlicherweise erkennt, wenn dieses fachsprachliche Wort in Form eines Sprachsignals eingegeben wird; und
- Verwenden des korrigierten Textes um das zumindest eine Laborgerät und/oder das zumindest eine Labor-Softwaremodul dazu zu veranlassen, die Analyse, Synthese und/oder die Softwarefunktion gemäß Angaben in dem korrigierten Text auszuführen.

15. Das Verfahren nach Anspruch 14, wobei die Bereitstellung des Geräts ein Platzieren des Geräts innerhalb des gleichen Raums (404) wie das zumindest eine Laborgerät und/oder im gleichen Raum wie ein Hauptsteuerungsrechner einer Laboranlage, die das zumindest eine Laborgerät beinhaltet, umfasst.

## Claims

1. Laboratory system containing:
- at least one laboratory device (252, 254, 406, 408, 412, 414, 416) designed for analysing and/or synthesizing a chemical substance,
- at least one laboratory software module (248) designed for processing data obtained from the at least one laboratory device;
- a data processing device (213) having supervisory software (222) that provides an interface for using the at least one laboratory device and/or the at least one laboratory software module; and
- a portable device (212) having a microphone (214), wherein the device is interoperably connected to the supervisory software via a network (236), wherein the device is designed to interoperate with the supervisory software in order to allow a user (202) to use the at least one laboratory device and/or the at least one laboratory software module in contact-free fashion by means of voice input (204) into the microphone;
**characterized in that** the supervisory software is configured to:
- receive from the portable device a voice signal (206) that the microphone has picked up on the basis of the voice input, wherein the voice signal contains general-language and technical-language words spoken by the user;
- input the received voice signal into a voice-to-text conversion system, wherein the voice-to-text conversion system supports only the conversion of voice signals into a target vocabulary (234) that does not contain the technical-language words;
- receive from the voice-to-text conversion system a text (208) that was generated from the voice signal by the voice-to-text conversion system;
- generate a corrected text (210) from the received text, wherein the corrected text is generated by the supervisory software alone or by the supervisory software by means of interpretation with text correction software to which the supervisory software is operatively connected, wherein the corrected text is generated by automatically replacing words and expressions from the target vocabulary in the received text with technical-language words in accordance with an association table (238) of words in text form, wherein the association table associates at least one word from the target vocabulary with each of a multiplicity of technical-language words, wherein the at least one word from the target vocabulary that is associated with a technical-language word is a word or expression that the voice-to-text conversion system incorrectly identifies when this technical-language word is input in the form of a voice signal; and
- use the corrected text to prompt the at least one laboratory device and/or the at least one laboratory software module to perform the analysis, synthesis and/or software function in accordance with statements in the corrected text.

2. Laboratory system according to Claim 1, wherein the supervisory software is in the form of a virtual laboratory assistant for the operation of the at least one laboratory device and the at least one laboratory software module.

3. Laboratory system according to either of the preceding claims, wherein the portable device is configured to:
- receive a voice signal (206) from the user via the microphone;
- forward the received voice signal to the supervisory software for conversion of the voice signal into a text (208) by the supervisory software or by a voice-to-text conversion system (226) operatively connected thereto.

4. Laboratory system according to Claim 3, wherein the portable device further comprises a loudspeaker (218), wherein the portable device is configured to:
- respond to the sending of the voice signal by receiving a result (242) of a performance of a function from the supervisory software, wherein the function was performed in accordance with the text by the at least one laboratory device and/or by the at least one laboratory software module; and
- output the result to the user via the loudspeaker.

5. Laboratory system according to one of the preceding claims, wherein the portable device is located within the same room (404) as the at least one laboratory device and/or in the same room as a main control computer (246) of a laboratory installation containing the at least one laboratory device.

6. Laboratory system according to one of the preceding claims, wherein the portable device is a single-board computer, in particular a Raspberry Pi.

7. Laboratory system according to one of the preceding claims, wherein the technical-language words are words from one of the following categories:
- names of chemical substances, in particular of dyes and paints;
- physical, chemical, mechanical, optical or haptic properties of chemical substances;
- names of laboratory devices and chemical industry devices;
- names of laboratory consumables and laboratory equipment;
- trade names in the dye and paint realm.

8. Laboratory system according to one of the preceding claims, wherein the words and expressions from the target language that are stored in the association table are erroneous text outputs from the voice-to-text conversion system that were generated on the basis of voice inputs of technical words by a multiplicity of different people.

9. Laboratory system according to one of the preceding claims, wherein the at least one laboratory device is a multiplicity of laboratory devices, wherein the laboratory devices are each selected from a group comprising:
- an analysis station (406, 408) designed to analyse chemical substances or substance mixtures; and/or
- a synthesis station (412, 414) designed to perform a synthesis of chemical substances or substance mixtures; and/or
- a preprocessing or post-processing station (410) designed to modify a chemical substance before or after an analysis or synthesis step such that a subsequent work or transportation step is possible.

10. Laboratory system according to one of the preceding claims, wherein the at least one laboratory device is a multiplicity of laboratory devices that each serve as processing stations for a chemical substance, further comprising:
- a transportation unit (256) designed to transport the substances used for a synthesis or analysis to the processing stations in order to allow each of the processing stations to subject the substances to at least one processing step;
- a main control computer of a laboratory installation (244) containing the multiplicity of laboratory devices, wherein the main control computer contains control software configured to orchestrate the processing steps and the transportation of the chemical substances on the basis of instructions in the form of a structured text.

11. Laboratory system according to one of the preceding claims, wherein the supervisory software comprises an NLP processor (258) or is interoperable with an NLP processor and wherein the supervisory software is configured to:
- use the NLP processor to transform the corrected text into a structured text (211) that can be interpreted by a target system, wherein the target system is the at least one laboratory software module, the at least one laboratory device and/or control software of a main control computer of a laboratory installation comprising the at least one laboratory device; and
- input the structured text into the target system in order to prompt the latter to perform a laboratory-related software and/or hardware function.

12. Laboratory system according to one of the preceding claims, wherein the contact-free use comprises a conversion of the voice input into a text (210, 211),
- wherein the at least one laboratory software module is a chemical substance database designed to interpret the input text as a search input and to ascertain information pertaining to the search input in the database and to return said information to the supervisory software as result; and/or
- wherein the at least one laboratory software module is simulation software designed to simulate properties of chemical products, in particular paints and dyes, on the basis of a prescribed substance mixture specification, wherein the simulation software is designed to interpret the input text as a specification of the product whose properties are supposed to be simulated;
- wherein the at least one laboratory software module is control software (248) of a main control computer of a laboratory installation (244) containing the at least one laboratory device, wherein the control software is designed to prompt the at least one laboratory device and a transportation unit to perform a multiplicity of processing steps and the transportation of the chemical substances between the laboratory devices in accordance with the statements contained in the input text.

13. Laboratory system according to one of the preceding claims, wherein the supervisory software contains a register having accounts of a multiplicity of users registered for the supervisory software, wherein the supervisory software comprises a voice recognition function for identifying each of the registered users on the basis of the voice thereof, wherein the supervisory software is designed to allow the user to use, in contact-free fashion by voice input into the microphone, only the laboratory device and/or the laboratory software module that said user is authorized to use.

14. Method for controlling a laboratory device and/or a laboratory software module, comprising:
- providing at least one laboratory device (252, 254, 406, 408, 412, 414, 416) and at least one laboratory software module (248), wherein the at least one laboratory device is designed to analyse and/or synthesize a chemical substance, wherein the at least one laboratory software module is a laboratory software module for processing data obtained from the at least one laboratory device (252, 254, 406, 408, 412, 414, 416);
- providing a data processing device (213) having supervisory software (222), wherein the supervisory software provides a user with an interface for using the at least one laboratory device and/or the at least one laboratory software module; and
- providing a portable device (212) having a microphone (214), wherein the device is interoperably connected to the supervisory software via a network (236), wherein the device is designed to interoperate with the supervisory software in order to allow the user to use the at least one laboratory device and/or the at least one laboratory software module in contact-free fashion by means of voice input into the microphone;
**characterized in that** the supervisory software:
- receives from the portable device a voice signal (206) that the microphone has picked up on the basis of the voice input, wherein the voice signal contains general-language and technical-language words spoken by the user;
- inputs the received voice signal into a voice-to-text conversion system, wherein the voice-to-text conversion system supports only the conversion of voice signals into a target vocabulary (234) that does not contain the technical-language words;
- receives from the voice-to-text conversion system a text (208) that was generated from the voice signal by the voice-to-text conversion system;
- generates a corrected text (210) from the received text, wherein the corrected text is generated by the supervisory software alone or by the supervisory software by means of interpretation with text correction software to which the supervisory software is operatively connected, wherein the corrected text is generated by automatically replacing words and expressions from the target vocabulary in the received text with technical-language words in accordance with an association table (238) of words in text form, wherein the association table associates at least one word from the target vocabulary with each of a multiplicity of technical-language words, wherein the at least one word from the target vocabulary that is associated with a technical-language word is a word or expression that the voice-to-text conversion system incorrectly identifies when this technical-language word is input in the form of a voice signal; and
- uses the corrected text to prompt the at least one laboratory device and/or the at least one laboratory software module to perform the analysis, synthesis and/or software function in accordance with statements in the corrected text.

15. Method according to Claim 14, wherein the providing of the device comprises placing the device within the same room (404) as the at least one laboratory device and/or in the same room as a main control computer of a laboratory installation containing the at least one laboratory device.

## Revendications

1. Système de laboratoire, incluant :
- au moins un appareil de laboratoire (252, 254, 406, 408, 412, 414, 416), qui est configuré pour analyser et/ou synthétiser une substance chimique,
- au moins un module logiciel de laboratoire (248), qui est configuré pour traiter des données qui ont été obtenues par l'au moins un appareil de laboratoire ;
- un appareil de traitement de données (213) doté d'un logiciel de contrôle (222) qui fournit une interface servant au maniement de l'au moins un appareil de laboratoire et/ou de l'au moins un module logiciel de laboratoire ; et
- un appareil portable (212) pourvu d'un microphone (214), l'appareil étant connecté de manière interopérable avec le logiciel de contrôle par le biais d'un réseau (236), l'appareil étant configuré pour, en interopérabilité avec le logiciel de contrôle, permettre à un utilisateur (202) un maniement sans intervention de l'au moins un appareil de laboratoire et/ou de l'au moins un module logiciel de laboratoire par saisie vocale (204) dans le microphone ;
**caractérisé en ce que** le logiciel de contrôle est configuré pour :
- recevoir un signal vocal (206), que le microphone a enregistré sur la base de la saisie vocale, en provenance de l'appareil portable, le signal vocal contenant des mots du langage courant et d'un langage technique prononcés par l'utilisateur ;
- entrer le signal vocal reçu dans un système de conversion de parole en texte, le système de conversion de parole en texte prenant uniquement en charge la conversion de signaux vocaux en un vocabulaire cible (234) qui ne contient pas les mots du langage technique ;
- recevoir un texte (208), lequel a été généré par le système de conversion de parole en texte à partir du signal vocal, en provenance du système de conversion de parole en texte ;
- générer un texte corrigé (210) à partir du texte reçu, le texte corrigé étant généré par le logiciel de contrôle seul ou par le logiciel de contrôle en interprétation avec un logiciel de correction de texte avec lequel le logiciel de contrôle est connecté de manière opérationnelle, le texte corrigé étant généré par remplacement automatique de mots et d'expressions du vocabulaire cible dans le texte reçu par des mots du langage technique selon une table d'association (238) de mots sous forme de texte, la table d'association associant au moins un mot du vocabulaire cible à chacun d'une pluralité de mots du langage technique, l'au moins un mot du vocabulaire cible associé à un mot du langage technique étant un mot ou une expression que le système de conversion de parole en texte reconnaît de manière erronée lorsque ce mot du langage technique est entré sous la forme d'un signal vocal ; et
- utiliser le texte corrigé pour amener l'au moins un appareil de laboratoire et/ou l'au moins un module logiciel de laboratoire à effectuer l'analyse, la synthèse et/ou la fonction logicielle conformément à des indications dans le texte corrigé.

2. Système de laboratoire selon la revendication 1, le logiciel de contrôle étant réalisé sous la forme d'assistant de laboratoire virtuel pour le fonctionnement de l'au moins un appareil de laboratoire et de l'au moins un module logiciel de laboratoire.

3. Système de laboratoire selon l'une des revendications précédentes, l'appareil portable étant configuré pour :
- recevoir un signal vocal (206) de l'utilisateur par le biais du microphone ;
- retransmettre le signal vocal reçu au logiciel de contrôle en vue de la conversion du signal vocal en un texte (208) par le logiciel de contrôle ou par un système de conversion de parole en texte (226) connecté de manière opérationnelle à celui-ci.

4. Système de laboratoire selon la revendication 3, l'appareil portable comportant en outre un haut-parleur (218), l'appareil portable étant configuré pour :
- en réponse à l'émission du signal vocal, réception d'un résultat (242) d'une exécution d'une fonction par le logiciel de contrôle, la fonction ayant été réalisée conformément au texte par l'au moins un appareil de laboratoire et/ou par l'au moins un module logiciel de laboratoire ; et
- délivrer en sortie le résultat à l'utilisateur par le biais du haut-parleur.

5. Système de laboratoire selon l'une des revendications précédentes, l'appareil portable se trouvant à l'intérieur du même local (404) que l'au moins un appareil de laboratoire et/ou dans le même local qu'un ordinateur de commande principal (246) d'une installation de laboratoire qui contient l'au moins un appareil de laboratoire.

6. Système de laboratoire selon l'une des revendications précédentes, l'appareil portable étant un ordinateur monocarte, notamment un Raspberry Pi.

7. Système de laboratoire selon l'une des revendications précédentes, les mots du langage technique étant des mots de l'une des catégories suivantes :
- noms de substances chimiques, notamment de peintures et de vernis ;
- propriétés physiques, chimiques, mécaniques, optiques ou haptiques de substances chimiques ;
- noms d'appareils de laboratoire et d'appareils de l'industrie chimique ;
- noms de consommables de laboratoire et de fournitures de laboratoire ;
- noms commerciaux dans le secteur des peintures et vernis.

8. Système de laboratoire selon l'une des revendications précédentes, les mots et les expressions de la langue cible mémorisés dans le tableau d'association représentant des sorties de texte erronées du système de conversion de parole en texte, lesquelles ont été générées sur la base de saisies vocales de mots techniques par une pluralité de personnes différentes.

9. Système de laboratoire selon l'une des revendications précédentes, l'au moins un appareil de laboratoire étant une pluralité d'appareils de laboratoire, les appareils de laboratoire étant respectivement choisis dans un groupe comprenant :
- une station d'analyse (406, 408) qui est configurée pour analyser des substances ou mélanges de substances chimiques ; et/ou
- une station de synthèse (412, 414) qui est configurée pour effectuer une synthèse de substances ou mélanges de substances chimiques ; et/ou
- une station de pré- ou de post-traitement (410), qui est configurée pour modifier une substance chimique avant ou après une étape d'analyse ou de synthèse de telle sorte qu'une étape de travail ou de transport suivante soit possible.

10. Système de laboratoire selon l'une des revendications précédentes, l'au moins un appareil de laboratoire étant une pluralité d'appareils de laboratoire, lesquels servent respectivement de stations de traitement d'une substance chimique, comprenant en outre :
- une unité de transport (256), qui est configurée pour transporter vers les stations de traitement les substances utilisées pour une synthèse ou une analyse afin de permettre respectivement aux stations de traitement de soumettre les substances à au moins une étape de traitement ;
- un ordinateur de commande principal d'une installation de laboratoire (244), lequel inclut la pluralité d'appareils de laboratoire, l'ordinateur de commande principal contenant un logiciel de commande qui est configuré pour orchestrer les étapes de traitement et le transport des substances chimiques en se basant sur des instructions sous la forme d'un texte structuré.

11. Système de laboratoire selon l'une des revendications précédentes, le logiciel de contrôle comportant un processeur NLP (258) ou pouvant interopérer avec un processeur NLP et le logiciel de contrôle étant configuré pour :
- utiliser le processeur NLP pour transformer le texte corrigé en un texte structuré (211), lequel peut être interprété par un système cible, le système cible étant l'au moins un module logiciel de laboratoire, l'au moins un appareil de laboratoire et/ou un logiciel de commande d'un ordinateur de commande principal d'une installation de laboratoire qui comprend l'au moins un appareil de laboratoire ; et
- entrée du texte structuré dans le système cible afin d'amener celui-ci à exécuter une fonction logicielle et/ou matérielle en rapport avec le laboratoire.

12. Système de laboratoire selon l'une des revendications précédentes, le maniement sans intervention comprenant une conversion de la saisie vocale en un texte (210, 211),
- l'au moins un module logiciel de laboratoire étant une base de données de substances chimiques qui est configurée pour interpréter le texte entré comme une saisie de recherche et déterminer des informations à propos de la saisie de recherche dans la base de données et les renvoyer en tant que résultat au logiciel de contrôle ; et/ou
- l'au moins un module logiciel de laboratoire étant un logiciel de simulation qui est configuré pour simuler des propriétés d'événements chimiques, notamment de vernis et de peintures, en se basant sur une spécification de mélange de substances prédéfinie, le logiciel de simulation étant configuré pour interpréter le texte entré comme une spécification de l'événement dont les propriétés doivent être simulées ;
- l'au moins un module logiciel de laboratoire étant un logiciel de commande (248) d'un ordinateur de commande principale d'une installation de laboratoire (244), qui inclut l'au moins un appareil de laboratoire, le logiciel de commande étant configuré pour amener l'au moins un appareil de laboratoire et une unité de transport à exécuter une pluralité d'étapes de traitement et le transport des substances chimiques entre les appareils de laboratoire conformément aux indications contenues dans le texte entré.

13. Système de laboratoire selon l'une des revendications précédentes, le logiciel de contrôle incluant un registre avec des comptes d'une pluralité d'utilisateurs enregistrés auprès du logiciel de contrôle, le logiciel de contrôle comprenant une fonction de reconnaissance de la voix destinée à reconnaître chacun des utilisateurs enregistrés à l'aide de sa voix, le logiciel de contrôle étant configuré pour ne permettre à l'utilisateur le maniement sans intervention que de l'appareil de laboratoire et/ou du module logiciel de laboratoire par saisie vocale dans le microphone pour lequel cet utilisateur possède l'autorisation de maniement.

14. Procédé de commande d'un appareil de laboratoire et/ou d'un module logiciel de laboratoire, comprenant :
- fourniture d'au moins un appareil de laboratoire (252, 254, 406, 408, 412, 414, 416) et d'au moins un module logiciel de laboratoire (248), l'au moins un appareil de laboratoire étant configuré pour analyser et/ou synthétiser une substance chimique, l'au moins un module logiciel de laboratoire étant un module logiciel de laboratoire destiné à traiter des données qui ont été obtenues par l'au moins un appareil de laboratoire (252, 254, 406, 408, 412, 414, 416) ;
- fourniture d'un appareil de traitement de données (213) doté d'un logiciel de contrôle (222), le logiciel de contrôle fournissant à un utilisateur une interface servant au maniement de l'au moins un appareil de laboratoire et/ou de l'au moins un module logiciel de laboratoire ; et
- fourniture d'un appareil portable (212) pourvu d'un microphone (214), l'appareil étant connecté de manière interopérable avec le logiciel de contrôle par le biais d'un réseau (236), l'appareil étant configuré pour, en interopérabilité avec le logiciel de contrôle, permettre à l'utilisateur un maniement sans intervention de l'au moins un appareil de laboratoire et/ou de l'au moins un module logiciel de laboratoire par saisie vocale dans le microphone ;
**caractérisé en ce que** le logiciel de contrôle effectue :
- la réception d'un signal vocal (206), que le microphone a enregistré sur la base de la saisie vocale, en provenance de l'appareil portable, le signal vocal contenant des mots du langage courant et d'un langage technique prononcés par l'utilisateur ;
- l'entrée du signal vocal reçu dans un système de conversion de parole en texte, le système de conversion de parole en texte prenant uniquement en charge la conversion de signaux vocaux en un vocabulaire cible (234) qui ne contient pas les mots du langage technique ;
- la réception d'un texte (208), lequel a été généré par le système de conversion de parole en texte à partir du signal vocal, en provenance du système de conversion de parole en texte ;
- la génération d'un texte corrigé (210) à partir du texte reçu, le texte corrigé étant généré par le logiciel de contrôle seul ou par le logiciel de contrôle en interprétation avec un logiciel de correction de texte avec lequel le logiciel de contrôle est connecté de manière opérationnelle, le texte corrigé étant généré par remplacement automatique de mots et d'expressions du vocabulaire cible dans le texte reçu par des mots du langage technique selon une table d'association (238) de mots sous forme de texte, la table d'association associant au moins un mot du vocabulaire cible à chacun d'une pluralité de mots du langage technique, l'au moins un mot du vocabulaire cible associé à un mot du langage technique étant un mot ou une expression que le système de conversion de parole en texte reconnaît de manière erronée lorsque ce mot du langage technique est entré sous la forme d'un signal vocal ; et
- l'utilisation du texte corrigé pour amener l'au moins un appareil de laboratoire et/ou de l'au moins un module logiciel de laboratoire à effectuer l'analyse, la synthèse et/ou la fonction logicielle conformément à des indications dans le texte corrigé.

15. Procédé selon la revendication 14, la fourniture de l'appareil comprenant une mise en place de l'appareil à l'intérieur du même local (404) que l'au moins un appareil de laboratoire et/ou dans le même local qu'un ordinateur de commande principal d'une installation de laboratoire qui contient l'au moins un appareil de laboratoire.
